# EUROPEAN PATENT APPLICATION

(11) **EP 4 819 514 A1**
(43) Date of publication of application: **07.10.2026**
(21) Application number: 25751663.3
(22) Date of filing: 07.02.2025
(51) Int. Cl.: H04J 13/18

(54) **COMMUNICATION METHOD AND COMMUNICATION APPARATUS**

(30) Priority: 08.02.2024 CN 202410178085
(71) Applicant: Honor Device Co., Ltd., Shenzhen, Guangdong 518040 (CN)
(72) Inventor: CHI, Liangang, Shenzhen, Guangdong 518040 (CN)
(74) Representative: MERH-IP Matias Erny Reichl Hoffmann Patentanwälte PartG mbB
(86) International application number: PCT/CN2025/076254
(87) International publication number: WO 2025/168064

(57) **Abstract**

This application provides a communication method and a communication apparatus, and relates to the field of communication technologies. Multiplexing of resources occupied by a plurality of types of channels such as a PDSCH and a PUSCH can be achieved, thereby increasing system capacity. The method includes: receiving first information from a network device, where the first information indicates a first orthogonal sequence; and on a first time-frequency domain resource by using the first orthogonal sequence, receiving first data sent by the network device via a first channel, and/or sending second data to the network device via a second channel, where the first channel includes a PDSCH and/or an NPDSCH, and the second channel includes one or more of the following: a PUSCH, an NPUSCH, a PRACH, or an NPRACH.

## Description

This application claims priority to Chinese Patent Application No. 202410178085.6, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

With the rapid development of communication technologies, non-terrestrial networks (non-terrestrial network, NTN) based on satellites and high-altitude platform systems (HAPS) are increasingly widely used. The NTN can provide economical and reliable network services for remote areas, airplanes or ships that cannot be covered by terrestrial networks, thereby improving network coverage. Satellites can provide continuous and uninterrupted network connectivity for mobile terminals such as airplanes, ships, and high-speed trains, thereby enhancing a service capability of mobile communication networks. A broadcast/multicast capability of satellites can provide efficient data distribution services for terminals at a network edge.

Coverage of an NTN satellite is very wide. Considering a device density, a large quantity of UEs may exist in the coverage of the satellite. Especially for a low earth orbiting (low earth orbiting, LEO) satellite, to enable UEs within coverage of the satellite to successfully transmit required data, the UEs within the coverage of the satellite need to quickly access and release LEO satellite resources. However, the total spectrum resources available to a network device may be limited, especially in early stages of NTN satellite deployment.

Therefore, currently, there is an urgent need to provide a method to enhance a multiplexing manner of a plurality of types of channels such as a physical downlink shared channel (physical downlink shared channel, PDSCH) and a physical uplink shared channel (physical uplink shared channel, PUSCH) of a network device like the NTN satellite, to improve system capacity.

### SUMMARY

This application provides a communication method and a communication apparatus. Multiplexing of resources occupied by a plurality of types of channels such as a PDSCH and a PUSCH can be achieved, thereby increasing system capacity.

According to a first aspect, a communication method is provided. The method includes: receiving first information from a network device, where the first information indicates a first orthogonal sequence; and on a first time-frequency domain resource by using the first orthogonal sequence, receiving first data sent by the network device via a first channel, and/or sending second data to the network device via a second channel, where the first channel includes a physical downlink shared channel PDSCH and/or a narrowband physical downlink shared channel NPDSCH, and the second channel includes one or more of the following: a physical uplink shared channel PUSCH, a narrowband physical uplink shared channel NPUSCH, a physical random access channel PRACH, or a narrowband physical random access channel NPRACH.

According to the communication method of this application, a terminal device may process, by using an orthogonal sequence, service data transmitted via a channel like a PDSCH, an NPDSCH, a PUSCH, or an NPUSCH, so that a plurality of terminal devices may transmit service data with the network device by using fully overlapping or partially overlapping time-frequency resources. This achieves code division multiplexing of the time-frequency domain resources, and improves utilization of the time-frequency domain resources. Based on the limited time-frequency domain resources, more terminal devices can be served, thereby increasing system capacity.

With reference to the first aspect, in some implementations of the first aspect, the first orthogonal sequence belongs to a first orthogonal sequence set, the first orthogonal sequence set belongs to a first orthogonal sequence set list, and the first orthogonal sequence set list is agreed on in a protocol or configured by the network device via signaling. In this way, the terminal device can determine the first orthogonal sequence set list, so that the network device indicates the first orthogonal sequence to the terminal device from within a range defined by the first orthogonal sequence set list.

It should be understood that one orthogonal sequence set list may include one or more orthogonal sequence sets, and one orthogonal sequence set may include one or more orthogonal sequences.

With reference to the first aspect, in some implementations of the first aspect, the method further includes: receiving second information from the network device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set.

In this way, the terminal device may determine the first orthogonal sequence set including the first orthogonal sequence and/or the sequence index of the orthogonal sequence included in the first orthogonal sequence set, so that the network device indicates the first orthogonal sequence to the terminal device from within a range defined by the first orthogonal sequence set.

With reference to the first aspect, in some implementations of the first aspect, the second information is carried in a system information block SIB, radio resource control RRC signaling, or a medium access control control element MAC CE.

With reference to the first aspect, in some implementations of the first aspect, by using the first orthogonal sequence, receiving the first data sent by the network device via the first channel, and/or sending the second data to the network device via the second channel includes: receiving the first data and/or sending the second data based on a time-frequency domain granularity and/or a time-frequency domain order of the first orthogonal sequence, where the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

In this way, the terminal device may determine a time-frequency domain resource corresponding to each code element in the first orthogonal sequence, so that the terminal device uses each code element in the first orthogonal sequence to process data transmitted on the time-frequency domain resource corresponding to the code element.

With reference to the first aspect, in some implementations of the first aspect, the time-frequency domain granularity and/or the time-frequency domain order are/is agreed on in a protocol or configured by the network device via signaling.

With reference to the first aspect, in some implementations of the first aspect, the time-frequency domain order includes one of the following: A time domain order is from front to back, and a frequency domain order is from low to high, with either frequency domain first followed by time domain, or time domain first followed by frequency domain.

It should be understood that the terms "front" and "back" in "a time domain order is from front to back" are relative to a chronological order. That is, for the first time-frequency domain resource, a time domain resource that arrives first corresponds to "front", and a time domain resource that arrives later corresponds to "back". The terms "low" and "high" in "a frequency domain order is from low to high" are relative to an ascending order of frequency domain resources. For example, the frequency domain resource in the first time-frequency domain resource is a plurality of subcarriers, and "from low to high" means from a subcarrier with a lowest frequency band to a subcarrier with a highest frequency band among the plurality of subcarriers.

With reference to the first aspect, in some implementations of the first aspect, the method further includes: receiving third information from the network device, where the third information indicates to activate or deactivate a part or all orthogonal sequence sets in the first orthogonal sequence set list, and the first orthogonal sequence belongs to the part or all of the orthogonal sequence sets; and/or the third information indicates to activate or deactivate a part or all orthogonal sequences in the first orthogonal sequence set, and the first orthogonal sequence belongs to the part or all of the orthogonal sequences.

In this way, the terminal device may determine the part or all of the orthogonal sequence sets that are activated or deactivated and/or the part or all of the orthogonal sequences that are activated or deactivated, so that the network device may indicate the first orthogonal sequence to the terminal device from within a range defined by the part or all of the orthogonal sequence sets, or indicate the first orthogonal sequence to the terminal device from within a range defined by the part or all of the orthogonal sequences.

With reference to the first aspect, in some implementations of the first aspect, the method further includes: sending, in a first time unit, response information to the network device in response to the third information.

In this way, the network device may determine that the terminal device successfully receives the third information.

With reference to the first aspect, in some implementations of the first aspect, the part or all of the orthogonal sequence sets or the part or all of the orthogonal sequences are activated or deactivated in a second time unit, the second time unit is an S^{th} time unit after the first time unit, and S is a positive integer.

In this way, the terminal device may determine an activation time or a deactivation time of the part or all of the orthogonal sequence sets, and/or may determine an activation time or a deactivation time of the part or all of the orthogonal sequences.

With reference to the first aspect, in some implementations of the first aspect, the first information is carried in DCI or a random access response RAR.

With reference to the first aspect, in some implementations of the first aspect, the downlink control information DCI is group DCI or user equipment UE-specific DCI.

With reference to the first aspect, in some implementations of the first aspect, the first information is carried in the group DCI, and a cyclic redundancy check CRC bit of the group DCI is scrambled with a first radio network temporary identifier RNTI; or the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or the first information is carried in a first field of the UE-specific DCI, the first field is a field preconfigured by higher layer signaling, and the first field indicates the first orthogonal sequence.

The first RNTI is a newly defined RNTI. The first field is a newly defined field configured by higher layer signaling such as RRC signaling.

With reference to the first aspect, in some implementations of the first aspect, the method further includes: receiving fourth information from the network device, where the fourth information indicates a second orthogonal sequence, and the second orthogonal sequence is used to process uplink control information UCI.

In this way, the terminal device may process the UCI and service data by using different orthogonal sequences, where the service data includes the first data and/or the second data.

With reference to the first aspect, in some implementations of the first aspect, the method further includes: receiving fifth information from the network device, where the fifth information indicates to enable or disable an orthogonal sequence multiplexing mode.

In this way, the terminal device may determine whether to process the first data and/or the second data by using an orthogonal sequence.

With reference to the first aspect, in some implementations of the first aspect, the first information is received in a third time unit, the first orthogonal sequence expires in a fourth time unit, the fourth time unit is a T^{th} time unit after the third time unit, and T is a positive integer.

In this way, the terminal device may determine an expiration time of the first orthogonal sequence, and further may not process the first data and/or the second data by using the first orthogonal sequence after the fourth time unit.

With reference to the first aspect, in some implementations of the first aspect, the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and the second orthogonal sequence set further includes a third orthogonal sequence, the time-frequency domain resource occupied by the first channel or the second channel further includes a second time-frequency domain resource, the third orthogonal sequence is used to process data transmitted on the second time-frequency domain resource, and the third orthogonal sequence is determined based on the first orthogonal sequence and the second time-frequency domain resource.

In this way, the terminal device may determine an orthogonal sequence for processing data transmitted on the remaining time-frequency domain resources other than the first time-frequency domain resource, and the network device does not need to indicate, to the terminal device via signaling, the orthogonal sequence for processing the data transmitted on the remaining time-frequency domain resources, thereby resulting in low signaling overheads.

With reference to the first aspect, in some implementations of the first aspect, a sequence index *k*ᵢ of the third orthogonal sequence meets the following formula: *k*ᵢ=(*k*₀+i×e) mod r, or *k*ᵢ=(*k*₀+*s*ᵢ×e) mod r, where *k*₀ is a sequence index of the first orthogonal sequence, i is a resource index of the second time-frequency domain resource, e is an adjustment step of the orthogonal sequence, r is a total quantity of orthogonal sequences included in the second orthogonal sequence set, and *s*ᵢ is an i^{th} value in a predefined sequence s. Herein, e may be a positive integer.

With reference to the first aspect, in some implementations of the first aspect, *k*₀ is agreed on in a protocol or configured by the network device via signaling.

With reference to the first aspect, in some implementations of the first aspect, the first time-frequency domain resource includes a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

In this way, the terminal device may determine, based on L, M, and N, a quantity of the REs included in the first time-frequency domain resource.

Optionally, the time-frequency domain resource occupied by the first channel or the second channel is agreed on in a protocol or configured by the network device via signaling. In this way, when determining the time-frequency domain resource occupied by the first channel or the second channel, L, M, and N, the terminal device may determine the first time-frequency domain resource. Similarly, the terminal device may also determine, in this manner, other time-frequency domain resources such as the second time-frequency domain resource, and further determine an orthogonal sequence corresponding to each time-frequency domain resource.

With reference to the first aspect, in some implementations of the first aspect, the quantity H of the plurality of REs meets the following formula: H=L×M×N.

With reference to the first aspect, in some implementations of the first aspect, one or more of L, M, or N are agreed on in a protocol or configured by the network device via signaling.

With reference to the first aspect, in some implementations of the first aspect, receiving the first data sent by the network device via the first channel includes: receiving a processed modulation symbol of the first data sent by the network device via the first channel, and processing the processed modulation symbol of the first data based on the first orthogonal sequence, to obtain the first data.

In this way, the terminal device may process, by using a normalized conjugate transpose sequence of the first orthogonal sequence, the modulation symbol of the first data processed by using the first orthogonal sequence, to obtain a modulation symbol of the first orthogonal sequence. Then, the terminal device may perform various processing such as channel decoding on the modulation symbol of the first orthogonal sequence, to obtain the first data.

With reference to the first aspect, in some implementations of the first aspect, sending the second data to the network device via the second channel includes: processing a modulation symbol of the second data by using the first orthogonal sequence, and sending the processed modulation symbol of the second data to the network device via the second channel.

According to a second aspect, another communication method is provided. The method includes: sending first information to a terminal device, where the first information indicates a first orthogonal sequence; and on a first time-frequency domain resource by using the first orthogonal sequence, sending first data to the terminal device via a first channel, and/or receiving second data sent by the terminal device via a second channel, where the first channel includes a physical downlink shared channel PDSCH and/or a narrowband physical downlink shared channel NPDSCH, and the second channel includes one or more of the following: a physical uplink shared channel PUSCH, a narrowband physical uplink shared channel NPUSCH, a physical random access channel PRACH, or a narrowband physical random access channel NPRACH.

With reference to the second aspect, in some implementations of the second aspect, the first orthogonal sequence belongs to a first orthogonal sequence set, the first orthogonal sequence set belongs to a first orthogonal sequence set list, and the first orthogonal sequence set list is agreed on in a protocol or configured by a network device via signaling.

With reference to the second aspect, in some implementations of the second aspect, the method further includes: sending second information to the terminal device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set.

With reference to the second aspect, in some implementations of the second aspect, the second information is carried in a system information block SIB, radio resource control RRC signaling, or a medium access control control element MAC CE.

With reference to the second aspect, in some implementations of the second aspect, by using the first orthogonal sequence, sending the first data to the terminal device via the first channel, and/or receiving the second data sent by the terminal device via the second channel includes: sending the first data and/or receiving the second data based on a time-frequency domain granularity and/or a time-frequency domain order of the first orthogonal sequence, where the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

With reference to the second aspect, in some implementations of the second aspect, the time-frequency domain granularity and/or the time-frequency domain order are/is agreed on in a protocol or configured by the network device via signaling.

With reference to the second aspect, in some implementations of the second aspect, the time-frequency domain order includes one of the following: A time domain order is from front to back, and a frequency domain order is from low to high, with either frequency domain first followed by time domain, or time domain first followed by frequency domain.

With reference to the second aspect, in some implementations of the second aspect, the method further includes: sending third information to the terminal device, where the third information indicates to activate or deactivate a part or all orthogonal sequence sets in the first orthogonal sequence set list, and the first orthogonal sequence belongs to the part or all of the orthogonal sequence sets; and/or the third information indicates to activate or deactivate a part or all orthogonal sequences in the first orthogonal sequence set, and the first orthogonal sequence belongs to the part or all of the orthogonal sequences.

With reference to the second aspect, in some implementations of the second aspect, the method further includes: receiving, in a first time unit, response information from the terminal device, where the response information is a response to the third information.

With reference to the second aspect, in some implementations of the second aspect, the part or all of the orthogonal sequence sets or the part or all of the orthogonal sequences are activated or deactivated in a second time unit, the second time unit is an S^{th} time unit after the first time unit, and S is a positive integer.

With reference to the second aspect, in some implementations of the second aspect, the first information is carried in DCI or a random access response RAR.

With reference to the second aspect, in some implementations of the second aspect, the downlink control information DCI is group DCI or user equipment UE-specific DCI.

With reference to the second aspect, in some implementations of the second aspect, the first information is carried in the group DCI, and a cyclic redundancy check CRC bit of the group DCI is scrambled with a first radio network temporary identifier RNTI; or the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or the first information is carried in a first field of the UE-specific DCI, the first field is a field preconfigured by higher layer signaling, and the first field indicates the first orthogonal sequence.

With reference to the second aspect, in some implementations of the second aspect, the method further includes: sending fourth information to the terminal device, where the fourth information indicates a second orthogonal sequence, and the second orthogonal sequence is used to process uplink control information UCI.

With reference to the second aspect, in some implementations of the second aspect, the method further includes: sending fifth information to the terminal device, where the fifth information indicates to enable or disable an orthogonal sequence multiplexing mode.

With reference to the second aspect, in some implementations of the second aspect, the first information is received in a third time unit, the first orthogonal sequence expires in a fourth time unit, the fourth time unit is a T^{th} time unit after the third time unit, and T is a positive integer.

With reference to the second aspect, in some implementations of the second aspect, the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and the second orthogonal sequence set further includes a third orthogonal sequence, the time-frequency domain resource occupied by the first channel or the second channel further includes a second time-frequency domain resource, the third orthogonal sequence is used to process data transmitted on the second time-frequency domain resource, and the third orthogonal sequence is determined based on the first orthogonal sequence and the second time-frequency domain resource.

With reference to the second aspect, in some implementations of the second aspect, a sequence index *k*ᵢ of the third orthogonal sequence meets the following formula: *k*ᵢ=(*k*₀+i×e) mod r, or *k*ᵢ=(*k*₀+*s*ᵢ×e) mod r, where *k*₀ is a sequence index of the first orthogonal sequence, i is a resource index of the second time-frequency domain resource, e is an adjustment step of the orthogonal sequence, r is a total quantity of orthogonal sequences included in the second orthogonal sequence set, and *s*ᵢ is an i^{th} value in a predefined sequence s. Herein, e may be a positive integer.

With reference to the second aspect, in some implementations of the second aspect, *k*₀ is agreed on in a protocol or configured by the network device via signaling.

With reference to the second aspect, in some implementations of the second aspect, the first time-frequency domain resource includes a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

With reference to the second aspect, in some implementations of the second aspect, a quantity H of the plurality of REs meets the following formula: $H = L \times M \times N .$

With reference to the second aspect, in some implementations of the second aspect, one or more of L, M, or N are agreed on in a protocol or configured by the network device via signaling.

With reference to the second aspect, in some implementations of the second aspect, sending the first data to the terminal device via the first channel includes: processing a modulation symbol of the first data by using the first orthogonal sequence, and sending the processed modulation symbol of the first data to the terminal device via the first channel.

With reference to the second aspect, in some implementations of the second aspect, receiving the second data sent by the terminal device via the second channel includes: receiving a processed modulation symbol of the second data sent by the terminal device via the second channel, and processing the modulation symbol of the second data based on the first orthogonal sequence, to obtain the second data.

According to a third aspect, a communication apparatus is provided, and is configured to perform the method in any one of the possible implementations of the first aspect. Specifically, the apparatus includes a module configured to perform the method in any one of the possible implementations of the first aspect.

According to a fourth aspect, another communication apparatus is provided, and is configured to perform the method in any one of the possible implementations of the second aspect. Specifically, the apparatus includes a module configured to perform the method in any one of the possible implementations of the second aspect.

According to a fifth aspect, this application provides still another communication apparatus, including a processor. The processor is coupled to a memory, and may be configured to execute instructions in the memory, to implement the method in any one of the possible implementations of the first aspect or the second aspect. Optionally, the apparatus further includes the memory. Optionally, the apparatus further includes a communication interface. The processor is coupled to the communication interface.

In an implementation, the apparatus is a terminal device (or a network device). When the apparatus is a terminal device (or a network device), the communication interface may be a transceiver, or an input/output interface.

In another implementation, the apparatus is a chip configured in a terminal device (or a network device). When the apparatus is a chip configured in a terminal device (or a network device), the communication interface may be an input/output interface.

According to a sixth aspect, a processor is provided, including: an input circuit, an output circuit, and a processing circuit. The processing circuit is configured to: receive a signal through the input circuit, and transmit a signal through the output circuit, to cause the processor to perform the method in any one of the possible implementations of the first aspect or the second aspect.

In a specific implementation process, the processor may be a chip, the input circuit may be an input pin, the output circuit may be an output pin, the processing circuit may be a transistor, a gate circuit, a flip-flop, various logic circuits, or the like. An input signal received by the input circuit may be, for example, but not limited to, received and input by a receiver. A signal output by the output circuit may be, for example, but not limited to, output to a transmitter and transmitted by the transmitter. In addition, the input circuit and the output circuit may be a same circuit, where the circuit is used as the input circuit and the output circuit at different moments. Specific implementations of the processor and various circuits are not limited in embodiments of this application.

According to a seventh aspect, a processing apparatus is provided, including a processor and a memory. The processor is configured to read instructions stored in the memory, and may receive a signal through a receiver and transmit a signal through a transmitter, to perform the method in any one of the possible implementations of the first aspect or the second aspect.

Optionally, there is one or more processors, and there is one or more memories.

Optionally, the memory may be integrated with the processor, or the memory and the processor may be separately disposed.

In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner in which the memory and the processor are disposed are not limited in this application.

It should be understood that for a related data interaction process, for example, sending indication information may be a process of outputting indication information from the processor, and receiving capability information may be a process of receiving and inputting capability information by the processor. Specifically, data that is processed and output may be output to the transmitter, and input data received by the processor may be from the receiver. The transmitter and the receiver may be collectively referred to as a transceiver.

The processing apparatus in the seventh aspect may be a chip, and the processor may be implemented by hardware or software. When being implemented by hardware, the processor may be a logic circuit, an integrated circuit, or the like; or when being implemented by software, the processor may be a general-purpose processor, and is implemented by reading software code stored in the memory. The memory may be integrated into the processor, or may be located outside the processor and independently exist.

According to an eighth aspect, a computer program product is provided. The computer program product includes a computer program (which may also be referred to as code or instructions). When the computer program is run, a computer is caused to perform the method in any one of the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is caused to perform the method in any one of the possible implementations of the first aspect or the second aspect.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of a first manner of processing, by using a first orthogonal sequence, data transmitted on a time-frequency domain resource according to an embodiment of this application;
FIG. 4 is a diagram of a second manner of processing, by using a first orthogonal sequence, data transmitted on a time-frequency domain resource according to an embodiment of this application;
FIG. 5 is a diagram of a third manner of processing, by using a first orthogonal sequence, data transmitted on a time-frequency domain resource according to an embodiment of this application;
FIG. 6 is a diagram of a fourth manner of processing, by using a first orthogonal sequence, data transmitted on a time-frequency domain resource according to an embodiment of this application;
FIG. 7 is a diagram of a fifth manner of processing, by using a first orthogonal sequence, data transmitted on a time-frequency domain resource according to an embodiment of this application;
FIG. 8 is a diagram of a plurality of time-frequency domain resources according to an embodiment of this application;
FIG. 9 is a diagram of REs included in a time-frequency domain resource according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions of this application with reference to the accompanying drawings.

In embodiments of this application, terms such as "first" and "second" are used to distinguish between same items or similar items with basically same functions and effects. For example, a first value and a second value are merely used to distinguish between different values, and are not intended to limit a sequence thereof. A person skilled in the art may understand that the terms such as "first" and "second" do not limit a quantity or an execution order, and the terms such as "first" and "second" do not define a definite difference.

It should be noted that, in embodiments of this application, terms such as "example" or "for example" are used to represent giving an example, an illustration, or a description. Any embodiment or design scheme described as "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character " generally represents an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR), and a future evolved communication system, for example, a 6th generation (6th generation, 6G) system.

A terminal device in embodiments of this application may also be referred to as user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or a vehicle-mounted device that has a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in this application.

As an example rather than a limitation, in this application, the terminal device may be a terminal device in an internet of things (internet of things, IoT) system. The internet of things is an important part in future development of information technology, and is mainly technically characterized in that a thing is connected to a network by using a communication technology, to implement an intelligent network of human-machine interconnection and interconnection between things. For example, the terminal device in embodiments of this application may be a wearable device. The wearable device may also be referred to as a wearable smart device, and is a general term for wearable devices that are intelligently designed and developed for daily wear by using a wearable technology, for example, glasses, gloves, a watch, clothing, and shoes. The wearable device is a portable device that can be directly worn on a body or integrated with clothes or an accessory of a user. The wearable device is more than a hardware device, and can even achieve a powerful function through software support, data interaction, and cloud interaction. In a broad sense, wearable intelligent devices include full-featured and large-size devices that can implement all or some functions without depending on smartphones, for example, smart watches or smart glasses, and devices that focus on only one type of application function and need to collaboratively work with other devices such as smartphones, for example, various smart bands or smart jewelry for monitoring physical signs.

As an example rather than a limitation, in embodiments of this application, the terminal device may alternatively be a terminal device in machine type communication (machine type communication, MTC). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle may perform the method provided in this application by using the vehicle-mounted module, the vehicle-mounted assembly, the vehicle-mounted component, the vehicle-mounted chip, the vehicle-mounted unit, or the like that is built in the vehicle. Therefore, embodiments of this application may also be applied to an internet of vehicles, for example, vehicle to everything (vehicle to everything, V2X), long term evolution-vehicle (long term evolution-vehicle, LTE-V), or a vehicle-to-vehicle (vehicle-to-vehicle, V2V) technology.

The network device related in this application may be a device communicating with the terminal device. The network device may also be referred to as an access network device or a wireless access network device. The network device may be a transmission reception point (transmission reception point, TRP), or may be an evolved base station (evolved NodeB, eNB or eNodeB) in an LTE system, or may be a home base station (for example, a home evolved NodeB, or a home Node B, HNB) or a base band unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. The foregoing network device may alternatively be a metro base station, a micro base station, a pico base station, a femto base station, or the like. This is not limited in this application.

For ease of understanding, some technical terms used in this application are first described.
1. Frequency domain unit: A unit of frequency domain resource, capable of indicating different granularities of frequency domain resources. The frequency domain unit may include, for example, but is not limited to, one subband (subband), one resource block (resource block, RB), one subcarrier, one resource block group (resource block group, RBG), or one precoding resource block group (precoding resource block group, PRG). In addition, a frequency domain length of one frequency domain unit may alternatively be Y times that of a CQI subband, where Y<=1, and a value of Y may be 1 or 1/2.
2. Time domain unit: A unit of time domain resource, capable of indicating different granularities of time domain resources. The time domain unit may include, for example, but is not limited to, one OFDM symbol, one slot quantity, one subframe, and the like.
3. An orthogonal sequence, also referred to as an orthogonal cover code (orthogonal cover code, OCC), an OCC code, an OCC sequence, or the like, is a coding technique used in a communication system. A principle of the orthogonal sequence is that original information is divided into a plurality of pieces of sub-information and encoded, so that codewords formed by each piece of sub-information after encoding are orthogonal to each other, thereby achieving efficient transmission and decoding of information.
4. Code element: One orthogonal sequence may include one or more elements, where each element may be referred to as a code element. For example, the orthogonal sequence is: [+1, -1], where +1 is one code element, and -1 is also one code element.
5. Sequence length of an orthogonal sequence: a quantity of code elements included in the orthogonal sequence. For example, the orthogonal sequence is: [+1, -1], a quantity of code elements is 1, and a sequence length of the orthogonal sequence is also 2.
6. Mod: a modulo operation, indicating a remainder obtained after division of two numeric expressions. For example, a modulo function may be in a format of mod (x, y) or x mod y, indicating a remainder obtained after division of x by y. The format of the modulo function is not limited in this application.

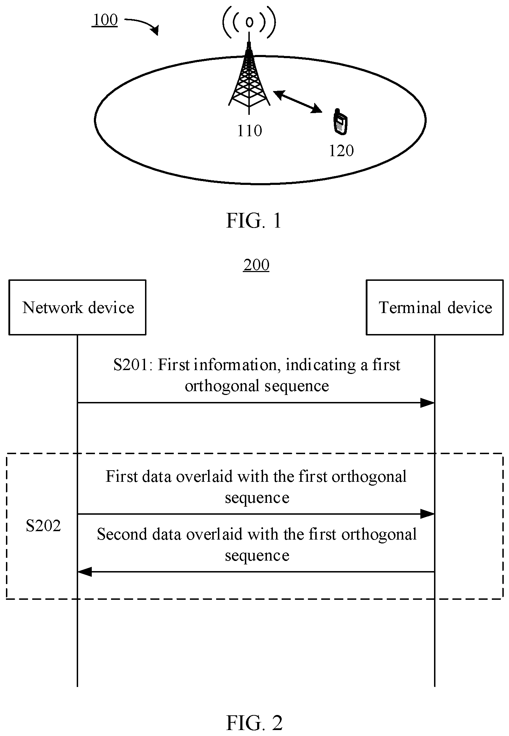

For ease of understanding embodiments of this application, the following describes in detail a communication system to which embodiments of this application are applicable with reference to FIG. 1.

FIG. 1 is a diagram of a communication system 100 to which an embodiment of this application is applicable. The communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a radio link. In a possible case, the network device 110 may be used as a transmit end, the terminal device 120 may be used as a receive end, and the network device 110 sends a signal to the terminal device 120. In another possible case, the network device 110 may be used as a receive end, the terminal device 120 may be used as a transmit end, and the terminal device 120 sends a signal to the network device 110.

Optionally, to implement information transmission with the terminal device 120, the network device 110 may include a communication module and a transceiver antenna.

It should be noted that FIG. 1 shows one network device 110 and one terminal device 120 as an example, and the communication system 100 may alternatively include a plurality of network devices and/or a plurality of terminal devices.

In addition, the network device 110 in the communication system 100 may alternatively be replaced with another type of network device such as a satellite. The terminal device 120 may alternatively be another type of terminal device such as a tablet computer or a smart band. This is not limited in embodiments of this application.

Optionally, when the network device 110 is a satellite, based on different orbital altitudes, the network device 110 may be any one of the following: a geostationary earth orbit (geostationary earth orbit, GEO) satellite, also referred to as a geosynchronous orbit satellite or a high-orbit satellite; a medium earth orbit (medium earth orbit, MEO) satellite, also referred to as a medium-orbit satellite; and a low earth orbit (low earth orbit, LEO) satellite, also referred to as a low-orbit satellite. In addition, a plurality of terminal devices within coverage of the network device 110 may perform communication by using the network device 110 as a relay.

A plurality of antennas may be configured for each of the foregoing communication devices, for example, the network device 110 or the terminal device 120 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that each communication device may include a plurality of components (for example, a processor, a modulator, a multiplexer, a demodulator, a demultiplexer, or an antenna) related to signal sending and receiving. Therefore, the network device 110 may communicate with the terminal device 120 by using a multi-antenna technology.

Optionally, the foregoing communication system 100 may further include other network entities such as a network controller and a mobility management entity. This is not limited in embodiments of this application.

It should be understood that the method provided in this embodiment of this application may be applied to various communication systems including a 5G new radio (new radio, NR) system. The communication system 100 shown in FIG. 1 is merely an example. Neither a specific architecture of an applicable system nor a quantity and form of various devices included in each communication system is limited in this application.

With the rapid development of communication technologies, coverage of network devices has become increasingly wide. In particular, satellites with extremely wide coverage need to provide network services to a large quantity of UEs within the coverage thereof.

For example, the network device is a satellite. The satellite may configure, for the terminal device, a time-frequency domain resource used for service communication such as a PDSCH and/or a PUSCH, so that the terminal device may receive, on the corresponding time-frequency domain resource, service data transmitted via the PDSCH from the network device, and send, on the corresponding time-frequency domain resource, service data to the satellite via the PUSCH.

However, time-frequency domain resources that can be scheduled by the network device are limited. To provide network services for a large quantity of terminal devices by using the limited time-frequency domain resources, there is currently an urgent need to provide a method to enhance utilization of the time-frequency domain resources and improve capacity of the communication system.

In view of this, this application provides a communication method. An OCC is configured for a terminal device, so that the terminal device may process, by using the OCC, service data transmitted with a network device, and further, a plurality of terminal devices may transmit service data with the network device by using fully overlapping or partially overlapping time-frequency resources. This achieves code division multiplexing of time-frequency domain resources, improves utilization of the time-frequency domain resources, and increases the system capacity.

For example, UE 1 may process, by using an OCC 1, service data 1 sent to the network device by using a time-frequency domain resource A; and a UE 2 may process, by using an OCC 2, service data 2 sent to the network device by using the time-frequency domain resource A. The OCC 1 and the OCC 2 may be orthogonal. The OCC 1 may be, for example, [+1, +1, -1, -1], and the OCC 2 may be, for example, [+1, -1, +1, -1]. In this way, the UE 1 and the UE 2 may send service data to the network device by using fully overlapping or partially overlapping time-frequency resources, and interference between transmission of the service data 1 by the UE 1 and transmission of the service data 2 by the UE 2 is small.

With reference to FIG. 2 to FIG. 6, the following describes in detail the communication method in this application. Embodiments shown in this application illustrate the communication method provided in this application from a perspective of device interaction. Specific forms and quantities of devices shown in the following description are merely examples, and should not constitute any limitation on implementation of the method provided in this application. The following describes in detail the communication method in this embodiment of this application by using an example in which the network device and the terminal device are execution bodies.

It should be understood that the terminal device may be the terminal device itself, may be a chip, a chip system, or a processor that supports the terminal device in implementing the communication method, or may be a logical module or software that can implement all or some of the terminal device. The network device may be the network device itself, or may be a chip, a chip system, or a processor that supports the network device in implementing the communication method, or may be a logical module or software that can implement all or some of the network device.

FIG. 2 is a schematic flowchart of a network device method 200 according to an embodiment of this application. The method 200 includes the following steps.

S201: A network device sends first information to a terminal device, where the first information indicates a first orthogonal sequence. Correspondingly, the terminal device receives the first information from the network device.

It should be understood that the first orthogonal sequence may alternatively be replaced with a first OCC, a first OCC code, a first OCC sequence, or the like. In addition, the first orthogonal sequence may include two or more code elements. The first orthogonal sequence may include one or more orthogonal sequences. For example, the first orthogonal sequence may be one or more orthogonal sequences shown in Table 1.

**Table 1**

| Index | Orthogonal sequence |
|---|---|
| 0 | [+1, +1, +1, +1] |
| 1 | [+1, -1, +1, -1] |
| 2 | [+1, +1, -1, -1] |
| 3 | [+1, -1, -1, +1] |

The network device may send the first information to the network device in the following manner.

In a possible implementation, the first information is carried in downlink control information (downlink control information, DCI) or a random access response (random access response, RAR).

In this way, before transmitting service data with the terminal device via a first channel and a second channel, the network device may indicate the first orthogonal sequence to the terminal device via the DCI. Alternatively, in a random access process of the terminal device, the network device indicates the first orthogonal sequence to the terminal device via an RAR, that is, a message 2 (message 2, Msg2) or a message B (message B, msgB) in the random access process, so that the terminal device may send a message 3 by using the first orthogonal sequence.

Optionally, the DCI is group DCI (group DCI) or UE-specific DCI (UE specific DCI).

In this way, the network device may send the first information to a plurality of terminal devices via the group DCI, resulting in low signaling overheads; or the network device may send the first information to a specific terminal device via the UE-specific DCI.

For example, the first information may be carried in the group DCI, and a cyclic redundancy check (cyclical redundancy check, CRC) bit of the group DCI is scrambled with a first radio network temporary identifier (radio network tempory identity, RNTI); or the first information may be carried in one of the following fields in the UE-specific DCI: a modulation and coding scheme (modulation and coding scheme, MCS) status indicator, a sounding reference signal resource set indicator (SRS resource set indicator), a sounding reference signal resource indicator (SRS resource indicator, SRI), or a downlink assignment index (downlink assignment index, DAI) status indicator; or the first information may be carried in a first field of the UE-specific DCI, the first field is a field preconfigured by higher layer signaling, and the first field indicates the first orthogonal sequence.

The first RNTI may be, for example, a newly defined RNTI. That is, the first RNTI is different from an existing RNTI. The first field may be a newly defined field, and a function of the first field may be to indicate the first orthogonal sequence. The higher layer signaling may be, for example, RRC signaling.

When the first information is carried in the MCS status indicator, the sounding reference signal resource set indicator, the sounding reference signal resource indicator SRI, or the DAI status indicator, before performing S201, the network device may indicate, to the terminal device, that the MCS status indicator, the sounding reference signal resource set indicator, the sounding reference signal resource indicator SRI, or the DAI status indicator, indicates the first orthogonal sequence.

In addition, the network device may indicate the first orthogonal sequence by using some or all states of the MCS status indicator, some or all states of the sounding reference signal resource set indicator, some or all states of the sounding reference signal resource indicator SRI, or some or all states of the DAI status indicator. This is not specifically limited in this application.

S202: On a first time-frequency domain resource, the network device sends first data to the terminal device via the first channel by using the first orthogonal sequence, where the first channel includes a PDSCH and/or a narrowband physical downlink shared channel (narrowband physical downlink shared channel, NPDSCH); and correspondingly, the terminal device receives the first data from the network device by using the first orthogonal sequence; and/or
on the first time-frequency domain resource, the terminal device sends second data to the network device via the second channel by using the first orthogonal sequence, where the second channel includes one or more of the following: a physical uplink shared channel PUSCH, a narrowband physical uplink shared channel (narrowband physical uplink shared channel, NPUSCH), a physical random access channel (physical random-access channel, PRACH), or a narrowband physical random access channel (narrowband physical random access channel, NPRACH); and correspondingly, the network device receives the second data from the terminal device.

It should be understood that the first time-frequency domain resource includes a time domain resource and/or a frequency domain resource, and the first time-frequency domain resource is a time-frequency domain resource used to transmit the first data and/or the second data. The first orthogonal sequence is used to process the first data and/or the second data transmitted on the first time-frequency domain resource.

The first data sent by the network device to the terminal device may be first data overlaid with the first orthogonal sequence; and the second data sent by the terminal device to the network device may be second data overlaid with the first orthogonal sequence.

The time domain resource included in the first time-frequency domain resource may be single-slot (sing-slot) or multi-slot (multi-slot). That is, the first orthogonal sequence may be used to process data transmitted in a single slot, or may be used to process data transmitted in multiple slots.

Optionally, the first time-frequency domain resource may be agreed on in a protocol or configured by the network device via signaling.

For example, the network device may send, to the terminal device, information indicating the first time-frequency domain resource. Correspondingly, the terminal device receives, from the network device, the information indicating the first time-frequency domain resource. For example, the information indicating the first time-frequency domain resource may be carried in downlink control information (downlink control information, DCI).

According to the communication method of this application, the terminal device may process, by using an orthogonal sequence, service data such as a PDSCH, an NPDSCH, a PUSCH, or an NPUSCH transmitted with the network device, so that a plurality of terminal devices may transmit service data with the network device by using fully overlapping or partially overlapping time-frequency resources. This achieves code division multiplexing of time-frequency domain resources, and improves utilization of the time-frequency domain resources. Based on the limited time-frequency domain resources, more terminal devices can be served, thereby increasing system capacity.

To facilitate understanding of a function of the first orthogonal sequence, the following describes in detail an implementation of S202.

In an optional embodiment, S202 may be implemented in the following manner: On the first time-frequency domain resource, the network device processes a modulation symbol of the first data by using the first orthogonal sequence, and sends the processed modulation symbol of the first data to the terminal device via the first channel. Correspondingly, the terminal device may receive the processed modulation symbol of the first data from the network device, and process the processed modulation symbol of the first data based on the first orthogonal sequence, to obtain the first data.

It should be understood that, before the network device sends the first data, processing such as channel encoding, rate matching, code block concatenation, scrambling, and modulation may be sequentially performed on the first data on the first channel, to obtain the modulation symbol of the first data. The modulation symbol may be a set of data represented by complex numbers. The modulation may include, for example, amplitude modulation, phase modulation, and the like. For brevity of description, the modulation symbol is not described again in the following.

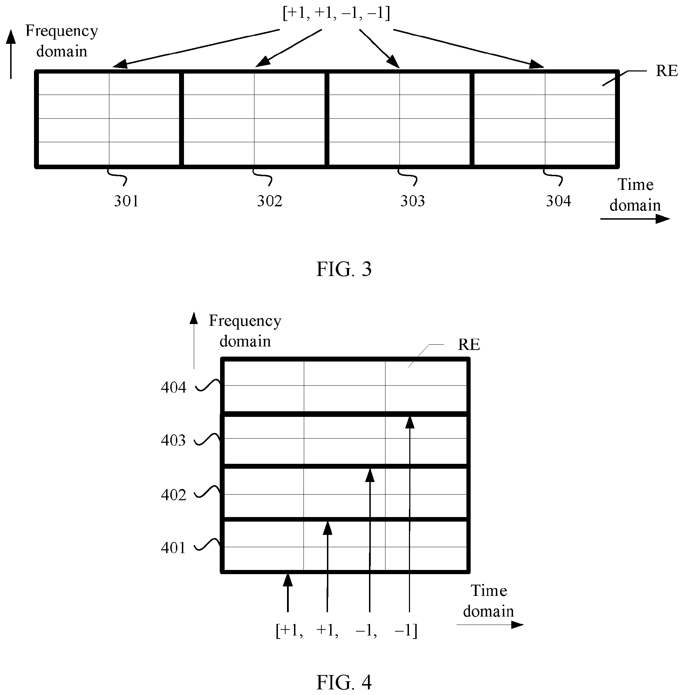

That the network device processes the first data by using the first orthogonal sequence may be understood as: The network device sequentially overlays each code element in the first orthogonal sequence onto the first data transmitted on the first time-frequency domain resource. For example, as shown in FIG. 3, the first time-frequency domain resource may include a plurality of resource elements (resource elements, REs). Each small square represents one RE. The first orthogonal sequence is: [+1, +1, -1, -1]. The network device may process, by using the first code element +1, the first data transmitted on REs circled by a box 301; process, by using the second code element +1, the first data transmitted on REs circled by a box 302; process, by using the third code element -1, the first data transmitted on REs circled by a box 303; and process, by using the fourth code element -1, the first data transmitted on REs circled by a box 304.

Correspondingly, what the terminal device receives is a modulation symbol of the first data processed by using the first orthogonal sequence. The terminal device may process, by using a normalized conjugate transpose sequence of the first orthogonal sequence, the modulation symbol of the first data processed by using the first orthogonal sequence, to obtain a modulation symbol of the first orthogonal sequence. Then, the terminal device may perform various processing such as channel decoding on the modulation symbol of the first orthogonal sequence, to obtain the first data.

It should be understood that the box 301 to the box 304 are respectively smallest blocks formed by bold solid lines in FIG. 3, the box 301 is adjacent to the box 302, the box 302 is adjacent to the box 303, and the box 303 is adjacent to the box 304. The small square corresponding to the RE is a smallest square formed by thin solid lines. The remaining boxes in the following description are also smallest boxes formed by bold solid lines, and the small square corresponding to each RE is also a smallest square formed by thin solid lines. For brevity, details are not described again in the following description.

In an optional embodiment, S202 may alternatively be implemented in the following manner: On the first time-frequency domain resource, the terminal device processes a modulation symbol of the second data by using the first orthogonal sequence, and sends the processed modulation symbol of the second data to the network device via the second channel. Correspondingly, the network device may receive the processed modulation symbol of the second data from the terminal device, and process the processed modulation symbol of the second data based on the first orthogonal sequence, to obtain the second data.

It should be understood that the first data is downlink service data, and the second data is uplink service data. A manner in which the terminal device sends the uplink service data, namely, the second data, to the network device is similar to a manner in which the network device sends the downlink service data, namely, the first data, to the terminal device. For details, refer to the foregoing description. Details are not described herein again.

Based on the foregoing embodiment, S202 may be implemented in the following manner: receiving the first data and/or sending the second data based on a time-frequency domain granularity and/or a time-frequency domain order of the first orthogonal sequence, where the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

It should be understood that, when the first data and/or the second data are processed by using the first orthogonal sequence, one code element in the first orthogonal sequence corresponds to a part of time-frequency domain resources in the first time-frequency domain resource. Time domain resources included in the part of time-frequency domain resources are the time domain granularity; and frequency domain resources included in the part of time-frequency domain resources are the frequency domain granularity.

For example, as shown in FIG. 3, one code element in the first orthogonal sequence corresponds to eight REs. It is assumed that, on the first time-frequency domain resource shown in FIG. 3, the horizontal direction represents the time domain, and the vertical direction represents the frequency domain. A time domain granularity corresponding to one code element is time domain resources included in the eight REs, namely, two orthogonal frequency division multiplexing (orthogonal frequency division multi-plexing, OFDM) symbols or two discrete Fourier transform-spread orthogonal frequency division multiplexing (DFT-s-OFDM) symbols. A frequency domain granularity corresponding to one code element is frequency domain resources included in the eight REs, namely, four subcarriers.

It should be noted that FIG. 3 is merely an example, and the time domain granularity may be any one of the following: a quantity of OFDM symbols, a quantity of slots, or a quantity of subframes; and/or the frequency domain granularity may be any one of the following: a quantity of REs, a quantity of RBs, a quantity of subbands, or an entire scheduled bandwidth. This is not specifically limited in this application.

Optionally, the time-frequency domain order includes one of the following: A time domain order is from front to back, and a frequency domain order is from low to high, with either frequency domain first followed by time domain, or time domain first followed by frequency domain.

That the time domain order is from front to back may also be understood as being only with respect to the time domain. "From front to back" may be in terms of chronological order. For example, with reference to FIG. 3, the vertical direction represents the frequency domain and the horizontal direction represents the time domain, the terminal device or the network device may sequentially use each code element in the first orthogonal sequence to process data transmitted on the first time-frequency domain resource in an order from the REs circled by the box 301 to the REs circled by the box 304.

That the frequency domain order is from low to high may also be understood as being only with respect to the frequency domain. For example, as shown in FIG. 4, the vertical direction represents the frequency domain and the horizontal direction represents the time domain. The time domain granularity is three OFDM symbols, and the frequency domain granularity is two subcarriers. The terminal device or the network device may sequentially use each code element in the first orthogonal sequence to process data transmitted on the first time-frequency domain resource in an order from REs circled by a box 401 to REs circled by a box 404.

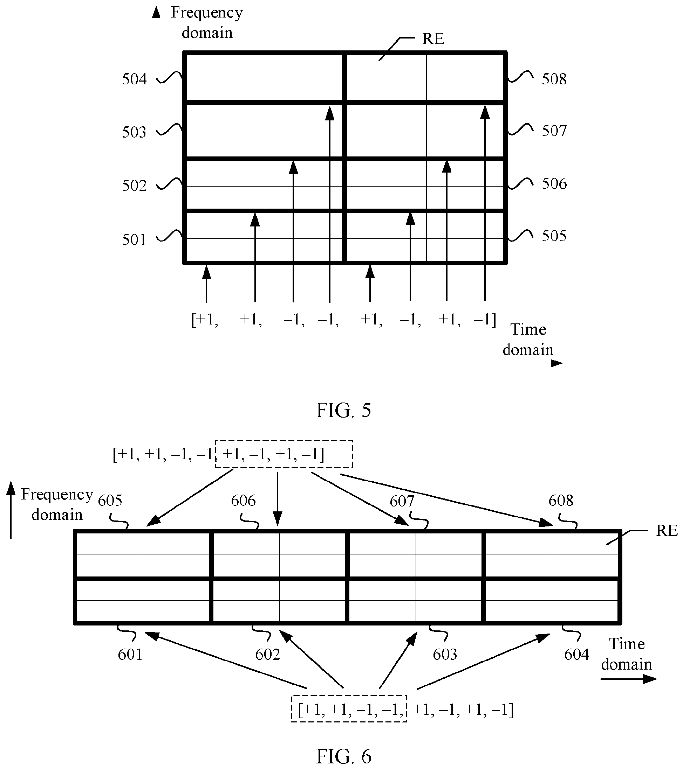

Frequency domain first followed by time domain may be understood as first processing data according to the frequency domain order from low to high, and then processing data according to the time domain order from front to back. For example, as shown in FIG. 5, the first orthogonal sequence is [+1, +1, -1, -1, +1, -1, +1, -1]. The network device or the terminal device first processes data according to the frequency domain order from low to high. That is, the network device or the terminal device first sequentially use first four code elements in the first orthogonal sequence to process data transmitted on REs circled by a box 501 to REs circled by a box 504 in an order from the REs circled by the box 501 to the REs circled by the box 504. Then processing data according to the time domain order from front to back means: After processing the data transmitted on the REs circled by the box 501 to the REs circled by the box 504, the network device or the terminal device processes data transmitted on REs circled by a box 505 to REs circled by a box 508. Time domain resources corresponding to the REs circled by the box 505 to the REs circled by the box 508 are time domain resources after time domain resources corresponding to the REs circled by the box 501 to the REs circled by the box 504. Therefore, the network device or the terminal device may continue to use last four code elements in the first orthogonal sequence to process the data transmitted on the REs circled by the box 505 to the REs circled by the box 508.

Time domain first followed by frequency domain may be understood as first processing data according to the time domain order from front to back, and then processing data according to the frequency domain order from low to high. For example, as shown in FIG. 6, the first orthogonal sequence is [1, 1, -1, -1, 1, -1, -1, 1]. The network device or the terminal device first processes data according to the time domain order from front to back. That is, the network device or the terminal device first sequentially uses first four code elements in the first orthogonal sequence to process data transmitted on REs circled by a box 601 to REs circled by a box 604 in an order from the REs circled by the box 601 to the REs circled by the box 604. Then processing data according to the frequency domain order from low to high means: The network device or the terminal device may continue to use last four code elements in the first orthogonal sequence to process data transmitted on REs circled by a box 605 to REs circled by a box 608.

Optionally, the time-frequency domain granularity and/or the time-frequency domain order are/is agreed on in a protocol or configured by the network device via signaling.

For example, the method 200 may include: The network device sends, to the terminal device, information indicating the time-frequency domain granularity and/or the time-frequency domain order. Correspondingly, the terminal device receives, from the network device, the information indicating the time-frequency domain granularity and/or the time-frequency domain order.

Being agreed on in a protocol results in small signaling overheads; and being configured via signaling provides high flexibility for the network device to indicate the time-frequency domain granularity and/or the time-frequency domain order to the terminal device.

Based on the foregoing embodiment, optionally, when the first time-frequency domain resource is not an integer multiple of the time-frequency domain granularity, time-frequency domain resources corresponding to some code elements in the first orthogonal sequence may be smaller than the time-frequency domain granularity.

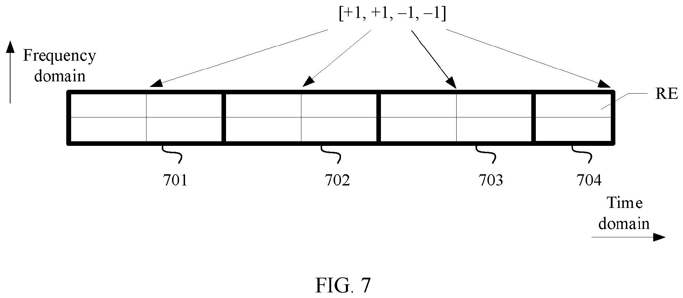

For example, as shown in FIG. 7, the first time-frequency domain resource includes 14 REs. The time domain granularity is two OFDM symbols; and the frequency domain granularity is two subcarriers, and the first orthogonal sequence is [+1, +1, -1, -1]. For the first time-frequency domain resource, after the terminal device or an electronic device processes, by using first three code elements in the first orthogonal sequence, data transmitted on REs circled by a box 701 to a box 703, data transmitted on two REs circled by a box 704 may be processed by using a fourth code element. The REs circled by the box 704 corresponding to the fourth code element include one OFDM symbol, which is less than the time domain granularity.

It should be understood that a processing manner in which time-frequency domain resources corresponding to some code elements in the first orthogonal sequence may be smaller than the time-frequency domain granularity may also be referred to as truncation processing of the first orthogonal sequence, or the like. This is not specifically limited in this application.

A configuration manner of the first orthogonal sequence is described in detail below. The configuration manner of the first orthogonal sequence may be classified into two cases, which are specifically as follows.

In a first case, the first orthogonal sequence belongs to a first orthogonal sequence set, and the first orthogonal sequence set belongs to a first orthogonal sequence set list. That is, the network device indicates the first orthogonal sequence to the terminal device from within the first orthogonal sequence set list.

In a second case, the first orthogonal sequence belongs to a first orthogonal sequence set. That is, the network device indicates the first orthogonal sequence to the terminal device from within the first orthogonal sequence set.

In the first case, the first orthogonal sequence set list may include one or more orthogonal sequence sets; and the first orthogonal sequence set may include one or more orthogonal sequences.

With reference to Table 2, Table 2 shows the first orthogonal sequence set list. The first orthogonal sequence set list includes an orthogonal sequence set indicated by a set index 0 and an orthogonal sequence set indicated by a set index 1.

The orthogonal sequence set indicated by the set index 0 includes three orthogonal sequences, and sequence lengths of the three orthogonal sequences are 3. The three orthogonal sequences include an orthogonal sequence indicated by a sequence index 0, an orthogonal sequence indicated by a sequence index 1, and an orthogonal sequence indicated by a sequence index 2. The orthogonal sequence set indicated by the set index 1 includes five orthogonal sequences, and sequence lengths of the five orthogonal sequences are 5. The five orthogonal sequences include an orthogonal sequence indicated by a sequence index 0, an orthogonal sequence indicated by a sequence index 1, an orthogonal sequence indicated by a sequence index 2, an orthogonal sequence indicated by a sequence index 3, and an orthogonal sequence indicated by a sequence index 4.

**Table 2**

| Sequence index | Set index 0 | Set index 1 |
|---|---|---|
| 0 | [1, 1, 1] | [1, 1, 1, 1, 1] |
| 1 | [1, *e*^{*j*×2×π/3}*, e*^{*j*×4×π/3}] | [1*, e*^{*j*×2×*π*/5}*, e*^{*j*×4×*π*/5}*, e*^{*j*×6×*π*/5}*, e*^{*j*×2×*π*/5}] |
| 2 | [+1, *e*^{*j*×4×*π*/3}, *e*^{*j*×2×*π*/3}] | [1, *e*^{*j*×4×*π*/5}, *e*^{*j*×8×*π*/5}, *e*^{*j*×2×*π*/5}, *e*^{*j*×6×*π*/5}] |
| 3 | / | [1*, e*^{*j*×6×*π*/5}*, e*^{*j*×2×*π*/5}*, e*^{*j*×8×*π*/5}*, e*^{*j*×4×*π*/5}] |
| 4 | / | [1*, e*^{*j*×8×*π*/5}*, e*^{*j*×6×*π*/5}*, e*^{*j*×4×*π*/5}*, e*^{*j*×2×*π*/5}] |

It should be noted that Table 2 is merely an example, and does not constitute a limitation on the first orthogonal sequence, the first orthogonal sequence set, and the first orthogonal sequence set list. For example, the set index 0 may alternatively include more or fewer orthogonal sequences, a code element in each orthogonal sequence may alternatively be another value, and the set index of the orthogonal sequence set with the sequence length of 3 may alternatively be 0 or the like.

Optionally, the first orthogonal sequence set list is agreed on in a protocol or configured by the network device via signaling. In this way, the terminal device determines the first orthogonal sequence from the first orthogonal sequence set list.

It should be understood that, when the first orthogonal sequence set list is configured by the network via signaling, information sent by the network device for indicating the first orthogonal set list and information for indicating the time-frequency domain granularity and/or the time-frequency domain order in the foregoing description may be configured via the same signaling, or may be configured via different signaling. In addition, when the information for indicating the first orthogonal set list and the information for indicating the time-frequency domain granularity and/or the time-frequency domain order in the foregoing description are configured via the same signaling, the information for indicating the first orthogonal set list and the information for indicating the time-frequency domain granularity and/or the time-frequency domain order may be carried in a same field of the signaling, or may be carried in different fields of the signaling. This is not specifically limited in this application.

On a basis that the terminal device can determine the first orthogonal sequence set list, in a possible implementation, the network device may indicate the first orthogonal sequence to the terminal device from within a range defined by the first orthogonal sequence set. For example, the first orthogonal sequence set is shown in Table 2. The first orthogonal sequence may be the orthogonal sequence indicated by the sequence index 0 in the orthogonal sequence set indicated by the set index 0, and the orthogonal sequence indicated by the sequence index 1 in the orthogonal sequence set indicated by the set index 1.

In this implementation, the first information may include, for example, a set index of the first orthogonal sequence set and a sequence index of the first orthogonal sequence. Because sequence indexes of orthogonal sequences in different orthogonal sequence sets may be the same, the first information may include the set index and the sequence index, so that the terminal device can determine the first orthogonal sequence.

In another possible implementation, the network device may activate or deactivate a part of orthogonal sequence sets in the first orthogonal sequence set list. That is, the network device indicates the first orthogonal sequence to the terminal device from within the part of the orthogonal sequence sets.

Optionally, the method 200 may further include: The network device sends third information to the terminal device, where the third information indicates to activate or deactivate a part or all of orthogonal sequence sets in the first orthogonal sequence set list, and the first orthogonal sequence belongs to the part or all of the orthogonal sequence sets. Correspondingly, the terminal device receives the third information from the network device.

The part or all of the orthogonal sequence sets may be one or more orthogonal sequence sets. For example, the first orthogonal sequence set list may be shown in Table 2. The part or all of the orthogonal sequence sets may be the orthogonal sequence set indicated by the set index 0, or may be the orthogonal sequence set indicated by the set index 0 and the orthogonal sequence set indicated by the set index 1.

It should be understood that before S201, to configure, by the network device, the first orthogonal sequence for the terminal device. The third information may indicate to activate the part or all of the orthogonal sequence sets in the first orthogonal sequence set list. In this way, the network device may subsequently indicate the first orthogonal sequence to the terminal device from within the part or all of the orthogonal sequence sets, so that a quantity of bits of the first information may be small. After S202, the third information may indicate to deactivate the part or all of the orthogonal sequence sets in the first orthogonal sequence set list, so that the terminal device stops receiving data and/or sending data by using the first orthogonal sequence.

Optionally, the third information may include set indexes of the part or all orthogonal sequence sets, and/or sequence lengths of orthogonal sequences in the part or all of the orthogonal sequence sets.

In this way, the terminal device may determine the part or all of the orthogonal sequence sets based on the set indexes and/or the sequence lengths. For example, with reference to Table 2, when the set indexes included in the third information are 0 and 1, the terminal device may determine that the part or all of the orthogonal sequence sets are the orthogonal sequence set indicated by the set index 0 and the orthogonal sequence set indicated by the set index 1; and when the sequence length is 3, the terminal device may determine that the part or all of the orthogonal sequence sets are the orthogonal sequence set indicated by the set index 0.

On the basis that the terminal device determines the part or all of the orthogonal sequence sets that are activated or deactivated, the network device may indicate the first orthogonal sequence in Manner 1, Manner 2, or Manner 3 described below.

Manner 1: The network device may further indicate the terminal device to activate or deactivate a part or all of orthogonal sequences in the part or all of the orthogonal sequence sets. The first orthogonal sequence is indicated by the network device to the network device from within a range defined by the part or all of the orthogonal sequences.

Optionally, the third information further indicates to activate or deactivate a part or all orthogonal sequences in the first orthogonal sequence set, and the first orthogonal sequence belongs to the part or all of the orthogonal sequences.

The first orthogonal sequence set may be the part or all of the orthogonal sequence sets that are activated or deactivated. The first orthogonal sequence set may include one or more orthogonal sequence sets. The part or all of the orthogonal sequences may include one or more orthogonal sequences. When the part or all of the orthogonal sequences include one orthogonal sequence, the part or all of the orthogonal sequences may be the first orthogonal sequence, and the third information may be, for example, information used by the network device to indicate the terminal device to deactivate the first orthogonal sequence. When the part or all of the orthogonal sequences include a plurality of orthogonal sequences, the part or all of the orthogonal sequences include the first orthogonal sequence.

In Example 1, the first information may be the sequence index of the first orthogonal sequence. For example, the part or all of the orthogonal sequences may include three orthogonal sequences, and sequence indexes of the three orthogonal sequences are 0, 1, and 2 respectively. The first information may be 0, and then the first orthogonal sequence is an orthogonal sequence indicated by 0. Indexes of the three orthogonal sequences may be configured by the network device via signaling, or may be agreed on in a protocol.

In Example 2, the first information may be indicated by a bitmap. For example, the part or all of the orthogonal sequences may include three orthogonal sequences, and sequence indexes of the three orthogonal sequences are 0, 1, and 2 respectively. If the first information is 110, the first orthogonal sequence is orthogonal sequences indicated by two 1s in the bitmap 110. For example, the orthogonal sequences indicated by the two 1s may be an orthogonal sequence indicated by a sequence index 0 and an orthogonal sequence indicated by a sequence index 1.

It should be understood that, when the first information includes a bitmap, and the first orthogonal sequence indicated by the bitmap is a plurality of orthogonal sequences, the terminal device may sequentially use the plurality of orthogonal sequences according to the time-frequency domain order in the foregoing description. For example, for the two orthogonal sequences indicated by the two 1s in the bitmap 110, the terminal device may sequentially use the two orthogonal sequences according to an order of time domain first followed by frequency domain.

Optionally, in Manner 1, the third information may include sequence indexes of the part or all of the orthogonal sequences and/or sequence lengths of the part or all of the orthogonal sequences. In this way, the terminal device may determine the part or all of the orthogonal sequences based on the sequence indexes and/or the sequence lengths.

Optionally, the third information is carried in medium access control control element (medium access control control element, MAC CE) signaling.

Based on the foregoing embodiment, the method 200 may further include: The terminal device sends, in a first time unit, response information to the network device in response to the third information. Correspondingly, the network device receives the response information.

It should be understood that the response information is a response to the third information, for example, may be a hybrid automatic repeat request-acknowledgement (hybrid automatic repeat request-acknowledgement, HARQ-ACK) message sent via a physical uplink control channel PUCCH or a PUSCH. The network device may determine, via the response information, that the terminal device successfully receives the third information.

Optionally, the part or all of the orthogonal sequence sets or the part or all of the orthogonal sequences are activated or deactivated in a second time unit, the second time unit is an S^{th} time unit after the first time unit, and S is a positive integer.

The S time units may be agreed on in a protocol or configured by the network device via signaling. In this way, the terminal device may determine a time for activating or deactivating the part or all of the orthogonal sequence sets or the part or all of the orthogonal sequences. For example, the first time unit may be an n^{th} slot, and the second time unit may be an (n+S)^{th} slot.

It should be understood that, when the S time units are configured by the network device via signaling, information sent by the network device for indicating the S time units and the third information may be configured via the same signaling, or may be configured via different signaling. In addition, when the third information and the information for indicating the S time units are configured via the same signaling, the third information and the information for indicating the S time units may be carried in a same field of the signaling, or may be carried in different fields of the signaling. This is not specifically limited in this application.

Manner 2: The network device may indicate the first orthogonal sequence set to the terminal device from within the part or all of the orthogonal sequence sets that are activated. Then, the network device may indicate the first orthogonal sequence to the terminal device from within a range defined by the first orthogonal sequence set.

Optionally, the method 200 further includes: The network device sends second information to the terminal device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set. Correspondingly, the terminal device receives the second information from the network device.

In this way, the terminal device may determine the first orthogonal sequence set and/or the sequence index of the orthogonal sequence included in the first orthogonal sequence set.

Based on the foregoing embodiment, the second information may be carried in a system information block (system information block, SIB), radio resource control (radio resource control, RRC) signaling, or a MAC CE.

It should be understood that the second information and the information for indicating the time-frequency domain granularity and/or the time-frequency domain order in the foregoing description may be configured via the same signaling, or may be configured via different signaling. In addition, when the second information and the information for indicating the time-frequency domain granularity and/or the time-frequency domain order are configured via the same signaling, the second information and the information for indicating the time-frequency domain granularity and/or the time-frequency domain order may be carried in a same field of the signaling, or may be carried in different fields of the signaling. This is not specifically limited in this application.

Manner 3: The network device may indicate the first orthogonal sequence to the terminal device from within a range defined by the part or all of the orthogonal sequence sets that are activated.

For example, the part or all of the orthogonal sequence sets are the orthogonal sequence sets indicated by the set index 0 and the set index 1 shown in Table 2. The first orthogonal sequence may be the orthogonal sequence indicated by the sequence index 0 in the orthogonal sequence set indicated by the set index 0, and the orthogonal sequence indicated by the sequence index 0 in the orthogonal sequence set indicated by the set index 1.

When the part or all of the orthogonal sequence sets include one orthogonal sequence set, the first information may be the sequence index of the first orthogonal sequence; and when the part or all of the orthogonal sequence sets include a plurality of orthogonal sequence sets, the first information may be the set index of the first orthogonal sequence set and the sequence index of the first orthogonal sequence, so that the terminal device can determine the first orthogonal sequence.

In the second case, the first orthogonal sequence belongs to the first orthogonal sequence set.

Optionally, the first orthogonal sequence set may be agreed on in a protocol or configured by the network device via signaling.

For example, the method 200 further includes: The network device sends second information to the terminal device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set. Correspondingly, the terminal device receives the second information from the network device.

In this way, the network device may indicate the first orthogonal sequence to the terminal device from within a range defined by the first orthogonal sequence set or the sequence index of the orthogonal sequence included in the first orthogonal sequence set.

On the basis that the terminal device determines the first orthogonal sequence set, the network device may further indicate the terminal device to activate or deactivate a part or all of orthogonal sequences in the first orthogonal sequence set.

Optionally, the method 200 may further include: The network device sends third information to the terminal device, where the third information indicates to activate or deactivate a part or all of orthogonal sequences in the first orthogonal sequence set, and the first orthogonal sequence belongs to the part or all of the orthogonal sequence sets. Correspondingly, the terminal device receives the third information from the network device.

In this way, the network device may indicate the first orthogonal sequence to the network device from within a range defined by the part or all of the orthogonal sequences.

It should be understood that an implementation of this embodiment is similar to the implementation of Manner 1 in the first case. For details, refer to the foregoing description. Details are not described herein again.

In an optional embodiment, the method 200 further includes: The network device sends fourth information to the terminal device, where the fourth information indicates a second orthogonal sequence, and the second orthogonal sequence is used to process uplink control information (uplink control information, UCI). Correspondingly, the terminal device receives the fourth information from the network device.

It should be understood that the second orthogonal sequence may be different from the first orthogonal sequence. In addition, the second orthogonal sequence may include one or more orthogonal sequences.

In this way, the network device or the terminal device may process, by using different orthogonal sequences, data such as UCI transmitted at a physical layer and a protocol data unit (protocol data unit, PDU) at a MAC layer.

It should be noted that the fourth information and the first information may be configured via the same signaling, or may be configured via different signaling. In addition, when the fourth information and the first information are configured via the same signaling, the fourth information and the first information may be carried in a same field of the signaling, or may be carried in different fields of the signaling. This is not specifically limited in this application.

In an optional embodiment, the method 200 further includes: The network device sends fifth information to the terminal device, where the fifth information indicates to enable or disable an orthogonal sequence multiplexing mode. Correspondingly, the terminal device receives the fifth information from the network device. In this way, the terminal device may determine whether to process, by using an orthogonal sequence, data transmitted via the first channel and/or the second channel.

For example, the fifth information may be carried in SIB signaling. In addition, the fifth information may be a first identifier or a second identifier. The first identifier indicates to enable the orthogonal sequence multiplexing mode, and the second identifier indicates to disable the orthogonal sequence multiplexing mode. For example, the first identifier and the second identifier may be 0 and 1 respectively, or the first identifier and the second identifier may be true and false respectively.

It should be understood that "turn on" may alternatively be replaced with "activate", "enable", or the like, and "turn off" may alternatively be replaced with "deactivate", "disable", or the like. This is not specifically limited in this application.

In addition, the method 200 may further include: The terminal device sends, to the network device, information indicating whether the orthogonal sequence multiplexing mode is supported. Correspondingly, the network device receives, from the terminal device, the information indicating whether the orthogonal sequence multiplexing mode is supported.

For example, the information indicating whether the orthogonal sequence multiplexing mode is supported may be carried in UE capability information. When determining, via the information, that the terminal device supports the orthogonal sequence multiplexing mode, the network device may indicate, via the fifth information, to enable the orthogonal sequence multiplexing mode. When determining, via the information, that the terminal device does not support the orthogonal sequence multiplexing mode, the network device may not enable the orthogonal sequence multiplexing mode.

In an optional embodiment, the first information is received in a third time unit, the first orthogonal sequence expires in a fourth time unit, the fourth time unit is a T^{th} time unit after the third time unit, and T is a positive integer.

In this way, the terminal device may determine an expiration time of the first orthogonal sequence. Expiration may be understood as that the first orthogonal sequence is no longer used to process the data transmitted via the first channel and/or the second channel.

It should be understood that expiration may also be replaced with deactivation or the like. This is not specifically limited in this application.

Optionally, the T time units may be agreed on in a protocol or configured by the network device via signaling.

For example, the third time unit may be, for example, an m^{th} slot, and the fourth time unit is an (m+T)^{th} slot.

It should be understood that, when the T time units are configured by the network device via signaling, the first information and the information sent by the network device for indicating the T time units may be configured via the same signaling, or may be configured via different signaling. In addition, when the first information and the information for indicating the T time units are configured via the same signaling, the first information and the information for indicating the T time units may be carried in a same field of the signaling, or may be carried in different fields of the signaling. This is not specifically limited in this application.

Based on the foregoing embodiment, the terminal device may further determine another orthogonal sequence based on the first orthogonal sequence, which is specifically as follows:
In an optional embodiment, the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and the second orthogonal sequence set further includes a third orthogonal sequence, the time-frequency domain resource occupied by the first channel or the second channel further includes a second time-frequency domain resource, the third orthogonal sequence is used to process data transmitted on the second time-frequency domain resource, and the third orthogonal sequence is determined based on the first orthogonal sequence and the second time-frequency domain resource.

It should be understood that the time-frequency domain resource occupied by the first channel or the second channel may be agreed on in a protocol or configured by the network device via signaling.

The time-frequency domain resource occupied by the first channel or the second channel may be divided into a plurality of time-frequency domain resources, and the first time-frequency domain resource may be one of the plurality of time-frequency domain resources.

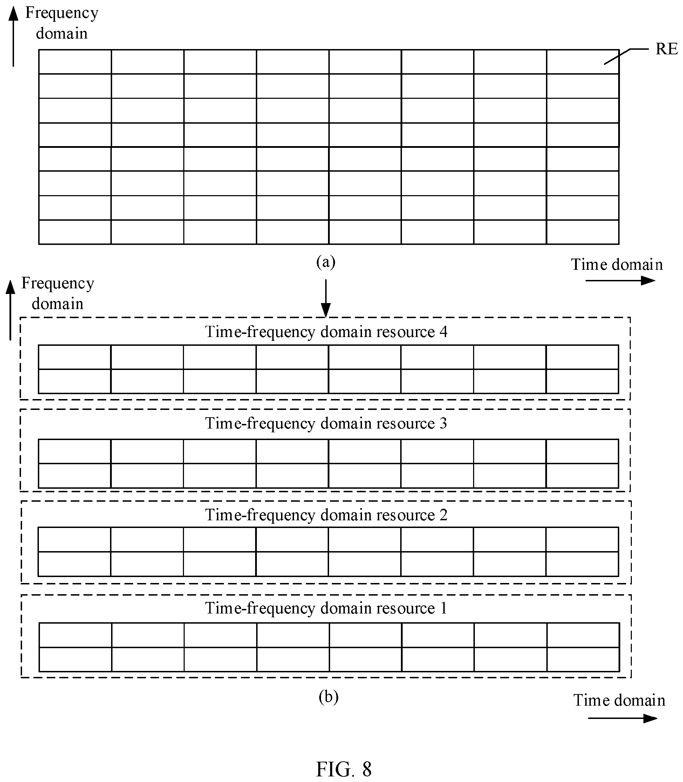

For example, the time-frequency domain resource occupied by the first channel or the second channel may be shown in (a) in FIG. 8, where each grid may represent one RE. The time-frequency domain resource occupied by the first channel or the second channel may be divided into a plurality of time-frequency domain resources. As shown in (b) in FIG. 8, the time-frequency domain resource occupied by the first channel or the second channel is divided into four time-frequency domain resources. The four time-frequency domain resources include: a time-frequency domain resource 1, a time-frequency domain resource 2, a time-frequency domain resource 3, and a time-frequency domain resource 4. The first time-frequency domain resource and the second time-frequency domain resource may each be one of the four time-frequency domain resources.

It should be noted that the above division is a concept introduced for understanding, and the terminal device and the network device may not perform a division action.

Optionally, a quantity of the plurality of time-frequency domain resources included in the time-frequency domain resource occupied by the first channel or the second channel may be agreed on in a protocol or configured by the network device via signaling. In this way, the terminal device may determine the plurality of time-frequency domain resources.

A resource index of each of the plurality of time-frequency domain resources may be agreed on in a protocol or configured by the network device via signaling. In this way, the terminal device may also determine the resource indexes of the plurality of time-frequency domain resources.

For example, among the four time-frequency domain resources shown in (b) in FIG. 8, a resource index of the time-frequency domain resource 1 may be 0; a resource index of the time-frequency domain resource 2 may be 1; a resource index of the time-frequency domain resource 3 may be 2; and a resource index of the time-frequency domain resource 4 may be 3.

For the foregoing plurality of time-frequency domain resources, different orthogonal sequences may be respectively used to process data transmitted on different time-frequency domain resources.

For example, the plurality of time-frequency domain resources are the four time-frequency domain resources shown in (b) in FIG. 8, and the second orthogonal sequence set may include four orthogonal sequences: an orthogonal sequence 1, an orthogonal sequence 2, an orthogonal sequence 3, and an orthogonal sequence 4. The first orthogonal sequence and the third orthogonal sequence may each be one of the four orthogonal sequences. The four orthogonal sequences may be used to process data transmitted on the four time-frequency domain resources.

Optionally, the second orthogonal sequence set may be, for example, the part or all of the orthogonal sequence sets that are activated; and/or the orthogonal sequence in the second orthogonal sequence set may be, for example, the part or all of the orthogonal sequences that are activated in the foregoing description. In this way, the terminal device may determine the plurality of orthogonal sequences used to process the data transmitted via the first channel and/or the second channel.

A sequence index of the orthogonal sequence in the second orthogonal sequence set may be different from sequence indexes of the part or all of the orthogonal sequences. For example, the part or all of the orthogonal sequences may be the orthogonal sequences indicated by the sequence index 0 and the sequence index 1 in the orthogonal sequence set indicated by the set index 0 and the orthogonal sequences indicated by the sequence index 0 and the sequence index 1 in the orthogonal sequence set indicated by the set index 1 in the foregoing Table 2.

When the network device or the terminal device determines that the four orthogonal sequences are used to process the data transmitted via the first channel and/or the second channel, the network device or the terminal device may determine new sequence indexes, for example, 0, 1, 2, and 3, of the four orthogonal sequences. The new sequence indexes may be agreed on in a protocol or configured by the network device via signaling. Alternatively, when determining the four orthogonal sequences, the network device and the terminal device may separately determine, by numbering from 0, sequence indexes of the four orthogonal sequences according to an order in which the network device indicates the four orthogonal sequences to the terminal device.

Optionally, the second orthogonal sequence set may be a predefined set. That is, the second orthogonal sequence set includes a plurality of predefined orthogonal sequences.

A set index of the second orthogonal sequence set and/or sequence indexes of the plurality of predefined orthogonal sequences included in the second orthogonal sequence set may be agreed on in a protocol or configured by the network device via signaling. In this way, the terminal device can determine, from the second orthogonal sequence set, an orthogonal sequence used to process data transmitted on a time-frequency domain resource other than the first time-frequency domain resource.

An orthogonal sequence other than the first orthogonal sequence in the second orthogonal sequence set may be determined in the following manner.

In a possible implementation, a sequence index of the third orthogonal sequence may be determined based on a sequence index of the first orthogonal sequence and a resource index of the second time-frequency domain resource.

For example, the sequence index *k*ᵢ of the third orthogonal sequence meets the following formula: ${k}_{i} = \left({k}_{0}+i\times e\right) mod r , or {k}_{i} = \left({k}_{0}+{s}_{i}\times e\right) mod r ,$ where
*k*₀ is the sequence index of the first orthogonal sequence, i is the resource index of the second time-frequency domain resource, e is an adjustment step of the orthogonal sequence, r is a total quantity of orthogonal sequences included in the second orthogonal sequence set, s is a predefined sequence, and *s*ᵢ is an i^{th} value in the predefined sequence s.

For example, e may be a positive integer, for example, 1 or 2. The predefined sequence may be represented by s, the predefined sequence may be a sequence including a plurality of integer values, and *s*ᵢ may be the i^{th} value in the sequence. For example, if the predefined sequence is [0, 2, 3, 1] and i is 0, then *s*ᵢ is 0. The resource index i may be an integer starting from 0.

By using one of the foregoing two formulas, the terminal device may determine, from the second orthogonal sequence set, an orthogonal sequence corresponding to each of the plurality of time-frequency domain resources.

Optionally, *k*₀, the predefined sequence, and e are agreed on in a protocol or configured by the network device via signaling.

It should be understood that, when *k*₀, the predefined sequence, and e are configured by the network device via signaling, the network device may configure *k*₀, the predefined sequence, and e via the same or different signaling. In addition, the first information and information sent by the network device for indicating *k*₀, the predefined sequence, and e may be configured via the same signaling, or may be configured via different signaling. In addition, when the first information and the information for indicating *k*₀, the predefined sequence, and e are configured via the same signaling, the first information and the information for indicating *k*₀, the predefined sequence, and e may be carried in a same field of the signaling, or may be carried in different fields of the signaling. This is not specifically limited in this application.

The first time-frequency domain resource is used as an example. Each of the plurality of time-frequency domain resources may alternatively be determined in the following manner.

Optionally, the first time-frequency domain resource includes a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

The sequence length L is a quantity of code elements included in the first orthogonal sequence. The quantity M may be understood as a time domain granularity corresponding to the first orthogonal sequence. The quantity N may be understood as a frequency domain granularity corresponding to the first orthogonal sequence.

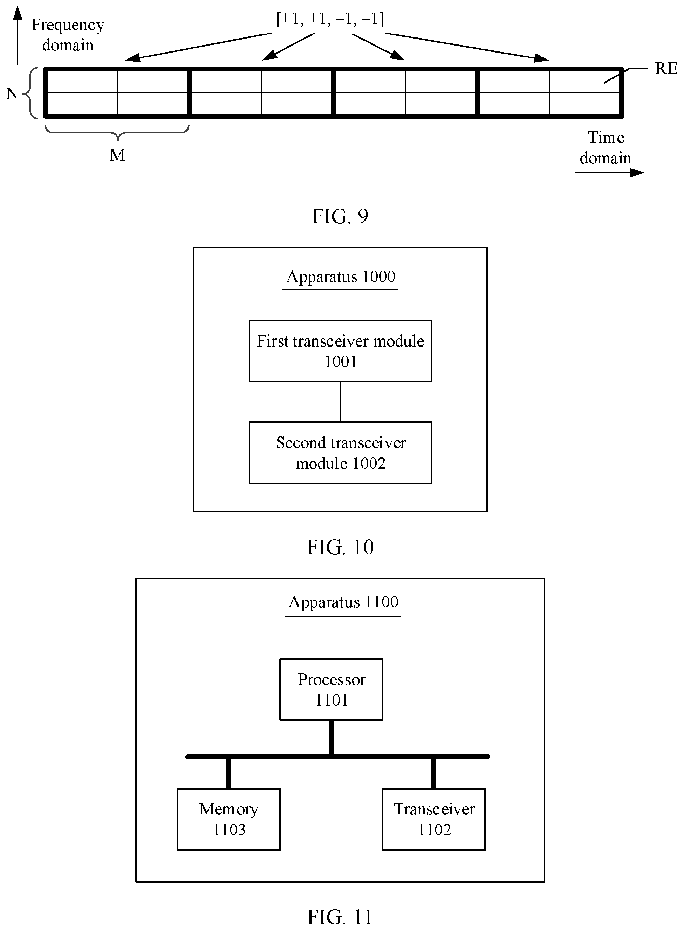

For example, a quantity H of the plurality of REs may meet the following formula: H=L×M×N. As shown in FIG. 9, it is assumed that the first time-frequency domain resource is 16 REs shown in FIG. 9, the first orthogonal sequence is [+1, +1, -1, -1], and L is 4. A time domain granularity corresponding to each code element in the first orthogonal sequence is two OFDM symbols or DFT-s-OFDM symbols, and M is 2. A frequency domain granularity corresponding to each code element in the first orthogonal sequence is two subcarriers, and N is 2. In this case, H=4×2×2=16. That is, the first time-frequency domain resource includes 16 REs.

Optionally, one or more of L, M, or N are agreed on in a protocol or configured by the network device via signaling.

It should be understood that, when one or more of L, M, or N are configured by the network device via signaling, the network device may configure L, M, or N via the same or different signaling. In addition, the first information and information sent by the network device for indicating one or more of L, M, or N may be configured via the same signaling, or may be configured via different signaling. In addition, when the first information and the information for indicating one or more of L, M, or N are configured via the same signaling, the first information and the information for indicating one or more of L, M, or N may be carried in a same field of the signaling, or may be carried in different fields of the signaling. This is not specifically limited in this application.

It should be noted that, in this embodiment of this application, the time-frequency domain resources shown in FIG. 3 to FIG. 9 are merely examples, and the first time-frequency domain resource, and the time-frequency domain resource occupied by the first channel or the second channel may be more or fewer. This is not specifically limited in this application.

It should be further noted that, in this embodiment of this application, modulation symbols processed by each code element in the orthogonal sequence may be the same or different. For example, with reference to FIG. 3, the network device may process, by using the first code element +1, a modulation symbol of the first data transmitted on the REs circled by the box 301, and process, by using the second code element +1, a modulation symbol of the first data transmitted on the REs circled by the box 302. The modulation symbol of the first data transmitted on the REs circled by the box 301 may be the same as or different from the modulation symbol of the first data transmitted on the REs circled by the box 302. A specific form of data processed by an orthogonal sequence is not limited in this application.

The foregoing describes in detail the communication method in embodiments of this application with reference to FIG. 2 to FIG. 9. The following describes in detail a communication apparatus in embodiments of this application with reference to FIG. 10 and FIG. 11.

FIG. 10 is a diagram of a structure of a communication apparatus 1000 according to an embodiment of this application. As shown in FIG. 10, the apparatus 1000 includes a receiving module 1001 and a sending module 1002.

In a possible implementation, the apparatus 1000 is configured to implement the steps corresponding to the terminal device in the foregoing method 200.

The receiving module 1001 is configured to receive first information from a network device, where the first information indicates a first orthogonal sequence. The second transceiver module 1002 is configured to: on a first time-frequency domain resource by using the first orthogonal sequence, receive first data sent by the network device via a first channel, and/or send second data to the network device via a second channel, where the first channel includes a physical downlink shared channel PDSCH and/or a narrowband physical downlink shared channel NPDSCH, and the second channel includes one or more of the following: a physical uplink shared channel PUSCH, a narrowband physical uplink shared channel NPUSCH, a physical random access channel PRACH, or a narrowband physical random access channel NPRACH.

Optionally, the first orthogonal sequence belongs to a first orthogonal sequence set, the first orthogonal sequence set belongs to a first orthogonal sequence set list, and the first orthogonal sequence set list is agreed on in a protocol or configured by the network device via signaling.

Optionally, the first transceiver module 1001 is further configured to receive second information from the network device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set.

Optionally, the second information is carried in a system information block SIB, radio resource control RRC signaling, or a medium access control control element MAC CE.

Optionally, the first transceiver module 1001 is specifically configured to: receive the first data and/or send the second data based on a time-frequency domain granularity and/or a time-frequency domain order of the first orthogonal sequence, where the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

Optionally, the time-frequency domain granularity and/or the time-frequency domain order are/is agreed on in a protocol or configured by the network device via signaling.

Optionally, the time-frequency domain order includes one of the following: A time domain order is from front to back, and a frequency domain order is from low to high, with either frequency domain first followed by time domain, or time domain first followed by frequency domain.

Optionally, the first transceiver module 1001 is further configured to receive third information from the network device, where the third information indicates to activate or deactivate a part or all orthogonal sequence sets in the first orthogonal sequence set list, and the first orthogonal sequence belongs to the part or all of the orthogonal sequence sets; and/or the third information indicates to activate or deactivate a part or all orthogonal sequences in the first orthogonal sequence set, and the first orthogonal sequence belongs to the part or all of the orthogonal sequences.

Optionally, the second transceiver module 1002 is further configured to send, in a first time unit, response information to the network device in response to the third information.

Optionally, the part or all of the orthogonal sequence sets or the part or all of the orthogonal sequences are activated or deactivated in a second time unit, the second time unit is an S^{th} time unit after the first time unit, and S is a positive integer.

Optionally, the first information is carried in DCI or a random access response RAR.

Optionally, the downlink control information DCI is group DCI or user equipment UE-specific DCI.

Optionally, the first information is carried in the group DCI, and a cyclic redundancy check CRC bit of the group DCI is scrambled with a first radio network temporary identifier RNTI; or the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or the first information is carried in a first field of the UE-specific DCI, the first field is a field preconfigured by higher layer signaling, and the first field indicates the first orthogonal sequence.

Optionally, the first transceiver module 1001 is further configured to receive fourth information from the network device, where the fourth information indicates a second orthogonal sequence, and the second orthogonal sequence is used to process uplink control information UCI.

Optionally, the first transceiver module 1001 is further configured to receive fifth information from the network device, where the fifth information indicates to enable or disable an orthogonal sequence multiplexing mode.

Optionally, the first information is received in a third time unit, the first orthogonal sequence expires in a fourth time unit, the fourth time unit is a T^{th} time unit after the third time unit, and T is a positive integer.

Optionally, the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and the second orthogonal sequence set further includes a third orthogonal sequence, the time-frequency domain resource occupied by the first channel or the second channel further includes a second time-frequency domain resource, the third orthogonal sequence is used to process data transmitted on the second time-frequency domain resource, and the third orthogonal sequence is determined based on the first orthogonal sequence and the second time-frequency domain resource.

Optionally, a sequence index *k*ᵢ of the third orthogonal sequence meets the following formula: *k*ᵢ=(*k*₀+i×e) mod r, or *k*ᵢ=(*k*₀+*s*ᵢ×e) mod r, where *k*₀ is a sequence index of the first orthogonal sequence, i is a resource index of the second time-frequency domain resource, e is an adjustment step of the orthogonal sequence, e may be a positive integer, r is a total quantity of orthogonal sequences included in the second orthogonal sequence set, and *s*ᵢ is an i^{th} value in a predefined sequence s.

Optionally, *k*₀ is agreed on in a protocol or configured by the network device via signaling.

Optionally, the first time-frequency domain resource includes a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

Optionally, a quantity H of the plurality of REs meets the following formula: H=L×M×N.

Optionally, one or more of L, M, or N are agreed on in a protocol or configured by the network device via signaling.

Optionally, the first transceiver module 1001 is further configured to: receive a processed modulation symbol of the first data sent by the network device via the first channel, and process the processed modulation symbol of the first data based on the first orthogonal sequence, to obtain the first data.

Optionally, the second transceiver module 1002 is specifically configured to: process a modulation symbol of the second data by using the first orthogonal sequence, and send the processed modulation symbol of the second data to the network device via the second channel.

In a possible implementation, the apparatus 1000 is configured to implement the steps corresponding to the network device in the foregoing method 200.

The first transceiver module 1001 is configured to send first information to a terminal device, where the first information indicates a first orthogonal sequence. The second transceiver module 1002 is configured to: on a first time-frequency domain resource by using the first orthogonal sequence, send first data to the terminal device via a first channel, and/or receive second data sent by the terminal device via a second channel, where the first channel includes a physical downlink shared channel PDSCH and/or a narrowband physical downlink shared channel NPDSCH, and the second channel includes one or more of the following: a physical uplink shared channel PUSCH, a narrowband physical uplink shared channel NPUSCH, a physical random access channel PRACH, or a narrowband physical random access channel NPRACH.

Optionally, the first orthogonal sequence belongs to a first orthogonal sequence set, the first orthogonal sequence set belongs to a first orthogonal sequence set list, and the first orthogonal sequence set list is agreed on in a protocol or configured by the apparatus 1000 via signaling.

Optionally, the first transceiver module 1001 is further configured to send second information to the terminal device, where the second information indicates the first orthogonal sequence set, the first orthogonal sequence belongs to the first orthogonal sequence set, and the second information includes: a set index of the first orthogonal sequence set and/or a sequence index of an orthogonal sequence included in the first orthogonal sequence set.

Optionally, the second information is carried in a system information block SIB, radio resource control RRC signaling, or a medium access control control element MAC CE.

Optionally, the second transceiver module 1002 is specifically configured to: send the first data and/or receive the second data based on a time-frequency domain granularity and/or a time-frequency domain order of the first orthogonal sequence, where the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

Optionally, the time-frequency domain granularity and/or the time-frequency domain order are/is agreed on in a protocol or configured by the apparatus 1000 via signaling.

Optionally, the time-frequency domain order includes one of the following: A time domain order is from front to back, and a frequency domain order is from low to high, with either frequency domain first followed by time domain, or time domain first followed by frequency domain.

Optionally, the first transceiver module 1001 is further configured to send third information to the terminal device, where the third information indicates to activate or deactivate a part or all orthogonal sequence sets in the first orthogonal sequence set list, and the first orthogonal sequence belongs to the part or all of the orthogonal sequence sets; and/or the third information indicates to activate or deactivate a part or all orthogonal sequences in the first orthogonal sequence set, and the first orthogonal sequence belongs to the part or all of the orthogonal sequences.

Optionally, the second transceiver module 1002 is further configured to receive, in a first time unit, response information from the terminal device, where the response information is a response to the third information.

Optionally, the part or all of the orthogonal sequence sets or the part or all of the orthogonal sequences are activated or deactivated in a second time unit, the second time unit is an S^{th} time unit after the first time unit, and S is a positive integer.

Optionally, the first information is carried in DCI or a random access response RAR.

Optionally, the downlink control information DCI is group DCI or user equipment UE-specific DCI.

Optionally, the first information is carried in the group DCI, and a cyclic redundancy check CRC bit of the group DCI is scrambled with a first radio network temporary identifier RNTI; or the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or the first information is carried in a first field of the UE-specific DCI, the first field is a field preconfigured by higher layer signaling, and the first field indicates the first orthogonal sequence.

Optionally, the first transceiver module 1001 is further configured to send fourth information to the terminal device, where the fourth information indicates a second orthogonal sequence, and the second orthogonal sequence is used to process uplink control information UCI.

Optionally, the first transceiver module 1001 is further configured to send fifth information to the terminal device, where the fifth information indicates to enable or disable an orthogonal sequence multiplexing mode.

Optionally, the first information is received in a third time unit, the first orthogonal sequence expires in a fourth time unit, the fourth time unit is a T^{th} time unit after the third time unit, and T is a positive integer.

Optionally, the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and the second orthogonal sequence set further includes a third orthogonal sequence, the time-frequency domain resource occupied by the first channel or the second channel further includes a second time-frequency domain resource, the third orthogonal sequence is used to process data transmitted on the second time-frequency domain resource, and the third orthogonal sequence is determined based on the first orthogonal sequence and the second time-frequency domain resource.

Optionally, a sequence index *k*ᵢ of the third orthogonal sequence meets the following formula: *k*ᵢ=(*k*₀+i×e) mod r, or *k*ᵢ=(*k*₀+*s*ᵢ×e) mod r, where *k*₀ is a sequence index of the first orthogonal sequence, i is a resource index of the second time-frequency domain resource, e is an adjustment step of the orthogonal sequence, e may be a positive integer, r is a total quantity of orthogonal sequences included in the second orthogonal sequence set, and *s*ᵢ is an i^{th} value in a predefined sequence s.

Optionally, *k*₀ is agreed on in a protocol or configured by the apparatus 1000 via signaling.

Optionally, the first time-frequency domain resource includes a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

Optionally, a quantity H of the plurality of REs meets the following formula: H=L×M×N.

Optionally, one or more of L, M, or N are agreed on in a protocol or configured by the apparatus 1000 via signaling.

Optionally, the second transceiver module 1002 is specifically configured to: process a modulation symbol of the first data by using the first orthogonal sequence, and send the processed modulation symbol of the first data to the terminal device via the first channel.

Optionally, the second transceiver module 1002 is specifically configured to: receive a processed modulation symbol of the second data sent by the terminal device via the second channel, and process the modulation symbol of the second data based on the first orthogonal sequence, to obtain the second data.

It should be understood that the apparatus 1000 herein is presented in a form of a functional module. The term "module" herein may refer to an application-specific integrated circuit (application-specific integrated circuit, ASIC), an electronic circuit, a processor configured to execute one or more software or firmware programs (for example, a shared processor, a dedicated processor, or a group processor), a memory, a merged logic circuit, and/or another appropriate component that supports the described function. In an optional example, a person skilled in the art may understand that the apparatus 1000 may be specifically the terminal device or the network device in the foregoing embodiments, and the apparatus 1000 may be configured to perform each procedure and/or step corresponding to the terminal device or the network device in the foregoing method embodiments. To avoid repetition, details are not described herein again.

The apparatus 1000 has a function of implementing corresponding steps performed by the terminal device or the network device in the foregoing methods. The foregoing function may be implemented by hardware, or may be implemented by hardware executing corresponding software. The hardware or the software includes one or more modules corresponding to the foregoing function.

In this embodiment of this application, the apparatus 1000 in FIG. 10 may alternatively be a chip, for example, an SOC or a modem. Correspondingly, the first transceiver module 1001 may be a transceiver circuit of the chip. This is not limited herein.

FIG. 11 is a diagram of a structure of an apparatus 1100 according to an embodiment of this application. The apparatus 1100 includes a processor 1101, a transceiver 1102, and a memory 1103. The processor 1101, the transceiver 1102, and the memory 1103 communicate with each other through an internal connection path. The memory 1103 is configured to store instructions. The processor 1101 is configured to execute the instructions stored in the memory 1103, to control the transceiver 1102 to send a signal and/or receive a signal.

It should be understood that the apparatus 1100 may be specifically a transmit end or a receive end in the foregoing embodiments, and may be configured to perform each step and/or procedure corresponding to the terminal device or the network device in the foregoing method embodiments. Optionally, the memory 1103 may include a read-only memory and a random access memory, and provide instructions and data to the processor. A part of the memory may further include a nonvolatile random access memory. For example, the memory may further store information about a device type. The processor 1101 may be configured to execute the instructions stored in the memory, and when the processor 1101 executes the instructions stored in the memory, the processor 1101 is configured to perform each step and/or procedure in the foregoing method embodiments. The transceiver 1102 may include a transmitter and a receiver. The transmitter may be configured to implement the steps and/or procedures that correspond to the foregoing transceiver and are used for performing a sending action, and the receiver may be configured to implement the steps and/or procedures that correspond to the foregoing transceiver and are used for performing a receiving action.

It should be understood that in embodiments of this application, the processor may be a central processing unit (central processing unit, CPU), and the processor may alternatively be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps of the foregoing method may be implemented by using a hardware integrated logic circuit in the processor or instructions in a form of software. The steps of the method disclosed in combination with embodiments of this application may be directly performed by a hardware processor, or may be performed through a combination of hardware and software modules in the processor. The software module may be located in a storage medium that is mature in the art, such as a random access memory, a flash memory, a read-only memory, a programmable read-only memory, an electrically erasable programmable memory, or a register. The storage medium is located in the memory. The processor executes the instructions in the memory, and completes the steps of the foregoing method in combination with hardware in the processor. To avoid repetition, details are not described herein again.

This application further provides a computer-readable storage medium. The computer-readable storage medium is configured to store a computer program, and the computer program is used to implement the method in the foregoing method embodiments.

This application further provides a computer program product. The computer program product includes a computer program (which may also be referred to as code or instructions). When the computer program is run on a computer, the computer may perform the method in the foregoing method embodiments.

A person of ordinary skill in the art may be aware that in combination with the examples described in embodiments disclosed in this specification, modules and algorithm steps can be implemented by electronic hardware or a combination of computer software and electronic hardware. Whether the functions are executed by hardware or software depends on specific applications and design constraints of the technical solutions. A person skilled in the art may use different methods to implement the described function for each particular application, but it should not be considered that the implementation goes beyond the scope of this application.

It may be clearly understood by a person skilled in the art that, for the purpose of convenient and brief description, for a detailed operating process of the foregoing system, apparatus, and module, reference may be made to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the modules is merely logical function division. In an actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in an electrical form, a mechanical from, or another form.

The modules described as separate parts may or may not be physically separate, and parts displayed as modules may or may not be physical modules, that is, may be located in one place, or may be distributed on a plurality of network modules. Some or all of the modules may be selected based on an actual requirement to achieve the objectives of the solutions of embodiments.

In addition, functional modules in embodiments of this application may be integrated into one processing module, or each module may exist alone physically, or two or more modules may be integrated into one module.

When the function is implemented in a form of a software functional module and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving first information from a network device, wherein the first information indicates a first orthogonal sequence; and
on a first time-frequency domain resource by using the first orthogonal sequence, receiving first data sent by the network device via a first channel, and/or sending second data to the network device via a second channel, wherein the first channel comprises a physical downlink shared channel PDSCH and/or a narrowband physical downlink shared channel NPDSCH, and the second channel comprises one or more of the following: a physical uplink shared channel PUSCH, a narrowband physical uplink shared channel NPUSCH, a physical random access channel PRACH, or a narrowband physical random access channel NPRACH.

2. The method according to claim 1, wherein the first orthogonal sequence belongs to a first orthogonal sequence set, the first orthogonal sequence set belongs to a first orthogonal sequence set list, and the first orthogonal sequence set list is agreed on in a protocol or configured by the network device via signaling.

3. The method according to claim 1 or 2, wherein the method further comprises:
receiving second information from the network device, wherein the second information indicates the first orthogonal sequence set, the first orthogonal sequence belongs to the first orthogonal sequence set, and the second information comprises: a set index of the first orthogonal sequence set and/or a sequence index of an orthogonal sequence comprised in the first orthogonal sequence set.

4. The method according to claim 3, wherein the second information is carried in a system information block SIB, radio resource control RRC signaling, or a medium access control control element MAC CE.

5. The method according to any one of claims 1 to 4, wherein by using the first orthogonal sequence, receiving the first data sent by the network device via the first channel, and/or sending the second data to the network device via the second channel comprises:
receiving the first data and/or sending the second data based on a time-frequency domain granularity and/or a time-frequency domain order of the first orthogonal sequence, wherein the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

6. The method according to claim 5, wherein the time-frequency domain granularity and/or the time-frequency domain order are/is agreed on in a protocol or configured by the network device via signaling.

7. The method according to claim 5 or 6, wherein the time-frequency domain order comprises one of the following: a time domain order is from front to back, and a frequency domain order is from low to high, with either frequency domain first followed by time domain, or time domain first followed by frequency domain.

8. The method according to any one of claims 1 to 7, wherein the method further comprises:
receiving third information from the network device, wherein
the third information indicates to activate or deactivate a part or all orthogonal sequence sets in the first orthogonal sequence set list, and the first orthogonal sequence belongs to the part or all of the orthogonal sequence sets; and/or
the third information indicates to activate or deactivate a part or all orthogonal sequences in the first orthogonal sequence set, and the first orthogonal sequence belongs to the part or all of the orthogonal sequences.

9. The method according to claim 8, wherein the method further comprises:
sending, in a first time unit, response information to the network device in response to the third information.

10. The method according to claim 9, wherein the part or all of the orthogonal sequence sets or the part or all of the orthogonal sequences are activated or deactivated in a second time unit, the second time unit is an S^{th} time unit after the first time unit, and S is a positive integer.

11. The method according to any one of claims 1 to 10, wherein the first information is carried in DCI or a random access response RAR.

12. The method according to claim 11, wherein the downlink control information DCI is group DCI or user equipment UE-specific DCI.

13. The method according to claim 12, wherein the first information is carried in the group DCI, and a cyclic redundancy check CRC bit of the group DCI is scrambled with a first radio network temporary identifier RNTI; or
the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or
the first information is carried in a first field of the UE-specific DCI, the first field is a field preconfigured by higher layer signaling, and the first field indicates the first orthogonal sequence.

14. The method according to any one of claims 1 to 13, wherein the method further comprises:
receiving fourth information from the network device, wherein the fourth information indicates a second orthogonal sequence, and the second orthogonal sequence is used to process uplink control information UCI.

15. The method according to any one of claims 1 to 14, wherein the method further comprises:
receiving fifth information from the network device, wherein the fifth information indicates to enable or disable an orthogonal sequence multiplexing mode.

16. The method according to any one of claims 1 to 15, wherein the first information is received in a third time unit, the first orthogonal sequence expires in a fourth time unit, the fourth time unit is a T^{th} time unit after the third time unit, and T is a positive integer.

17. The method according to any one of claims 1 to 16, wherein the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and
the second orthogonal sequence set further comprises a third orthogonal sequence, the time-frequency domain resource occupied by the first channel or the second channel further comprises a second time-frequency domain resource, the third orthogonal sequence is used to process data transmitted on the second time-frequency domain resource, and the third orthogonal sequence is determined based on the first orthogonal sequence and the second time-frequency domain resource.

18. The method according to claim 17, wherein a sequence index *k*ᵢ of the third orthogonal sequence meets the following formula: ${k}_{i} = \left({k}_{0}+i\times e\right) mod r , or {k}_{i} = \left({k}_{0}+{s}_{i}\times e\right) mod r ,$ wherein
*k*₀ is a sequence index of the first orthogonal sequence, i is a resource index of the second time-frequency domain resource, e is an adjustment step of the orthogonal sequence, r is a total quantity of orthogonal sequences comprised in the second orthogonal sequence set, and *s*ᵢ is an i^{th} value in a predefined sequence s.

19. The method according to claim 18, wherein *k*₀ is agreed on in a protocol or configured by the network device via signaling.

20. The method according to any one of claims 17 to 19, wherein the first time-frequency domain resource comprises a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

21. The method according to claim 20, wherein a quantity H of the plurality of REs meets the following formula: $H = L \times M \times N .$

22. The method according to claim 20 or 21, wherein one or more of L, M, or N are agreed on in a protocol or configured by the network device via signaling.

23. The method according to any one of claims 1 to 22, wherein receiving the first data sent by the network device via the first channel comprises:
receiving a processed modulation symbol of the first data sent by the network device via the first channel, and processing the processed modulation symbol of the first data based on the first orthogonal sequence, to obtain the first data.

24. The method according to any one of claims 1 to 22, wherein sending the second data to the network device via the second channel comprises:
processing a modulation symbol of the second data by using the first orthogonal sequence, and sending the processed modulation symbol of the second data to the network device via the second channel.

25. A communication method, comprising:
sending first information to a terminal device, wherein the first information indicates a first orthogonal sequence; and
on a first time-frequency domain resource by using the first orthogonal sequence, sending first data to the terminal device via a first channel, and/or receiving second data sent by the terminal device via a second channel, wherein the first channel comprises a physical downlink shared channel PDSCH and/or a narrowband physical downlink shared channel NPDSCH, and the second channel comprises one or more of the following: a physical uplink shared channel PUSCH, a narrowband physical uplink shared channel NPUSCH, a physical random access channel PRACH, or a narrowband physical random access channel NPRACH.

26. The method according to claim 25, wherein the first orthogonal sequence belongs to a first orthogonal sequence set, the first orthogonal sequence set belongs to a first orthogonal sequence set list, and the first orthogonal sequence set list is agreed on in a protocol or configured by a network device via signaling.

27. The method according to claim 25 or 26, wherein the method further comprises:
sending second information to the terminal device, wherein the second information indicates the first orthogonal sequence set, the first orthogonal sequence belongs to the first orthogonal sequence set, and the second information comprises: a set index of the first orthogonal sequence set and/or a sequence index of an orthogonal sequence comprised in the first orthogonal sequence set.

28. The method according to claim 27, wherein the second information is carried in a system information block SIB, radio resource control RRC signaling, or a medium access control control element MAC CE.

29. The method according to any one of claims 25 to 28, wherein by using the first orthogonal sequence, sending the first data to the terminal device via the first channel, and/or receiving the second data sent by the terminal device via the second channel comprises:
sending the first data and/or receiving the second data based on a time-frequency domain granularity and/or a time-frequency domain order of the first orthogonal sequence, wherein the time-frequency domain granularity is a time domain granularity and/or a frequency domain granularity corresponding to one code element in the first orthogonal sequence, and the time-frequency domain order is an order in which the first data and/or the second data are/is overlaid with the first orthogonal sequence.

30. The method according to claim 29, wherein the time-frequency domain granularity and/or the time-frequency domain order are/is agreed on in a protocol or configured by the network device via signaling.

31. The method according to claim 29 or 30, wherein the time-frequency domain order comprises one of the following: a time domain order is from front to back, and a frequency domain order is from low to high, with either frequency domain first followed by time domain, or time domain first followed by frequency domain.

32. The method according to any one of claims 25 to 31, wherein the method further comprises:
sending third information to the terminal device, wherein
the third information indicates to activate or deactivate a part or all orthogonal sequence sets in the first orthogonal sequence set list, and the first orthogonal sequence belongs to the part or all of the orthogonal sequence sets; and/or
the third information indicates to activate or deactivate a part or all orthogonal sequences in the first orthogonal sequence set, and the first orthogonal sequence belongs to the part or all of the orthogonal sequences.

33. The method according to claim 32, wherein the method further comprises:
receiving, in a first time unit, response information from the terminal device, wherein the response information is a response to the third information.

34. The method according to claim 33, wherein the part or all of the orthogonal sequence sets or the part or all of the orthogonal sequences are activated or deactivated in a second time unit, the second time unit is an S^{th} time unit after the first time unit, and S is a positive integer.

35. The method according to any one of claims 25 to 34, wherein the first information is carried in DCI or a random access response RAR.

36. The method according to claim 35, wherein the downlink control information DCI is group DCI or user equipment UE-specific DCI.

37. The method according to claim 36, wherein the first information is carried in the group DCI, and a cyclic redundancy check CRC bit of the group DCI is scrambled with a first radio network temporary identifier RNTI; or
the first information is carried in one of the following fields in the UE-specific DCI: a modulation and coding scheme MCS status indicator, a sounding reference signal resource set indicator, a sounding reference signal resource indicator SRI, or a downlink assignment index DAI status indicator; or
the first information is carried in a first field of the UE-specific DCI, the first field is a field preconfigured by higher layer signaling, and the first field indicates the first orthogonal sequence.

38. The method according to any one of claims 25 to 37, wherein the method further comprises:
sending fourth information to the terminal device, wherein the fourth information indicates a second orthogonal sequence, and the second orthogonal sequence is used to process uplink control information UCI.

39. The method according to any one of claims 25 to 38, wherein the method further comprises:
sending fifth information to the terminal device, wherein the fifth information indicates to enable or disable an orthogonal sequence multiplexing mode.

40. The method according to any one of claims 25 to 39, wherein the first information is received in a third time unit, the first orthogonal sequence expires in a fourth time unit, the fourth time unit is a T^{th} time unit after the third time unit, and T is a positive integer.

41. The method according to any one of claims 25 to 40, wherein the first time-frequency domain resource belongs to a part of time-frequency domain resources in a time-frequency domain occupied by the first channel or the second channel, the first orthogonal sequence belongs to a second orthogonal sequence set, and an orthogonal sequence in the second orthogonal sequence set is used to process data transmitted on a time-frequency domain resource occupied by the first channel or the second channel; and
the second orthogonal sequence set further comprises a third orthogonal sequence, the time-frequency domain resource occupied by the first channel or the second channel further comprises a second time-frequency domain resource, the third orthogonal sequence is used to process data transmitted on the second time-frequency domain resource, and the third orthogonal sequence is determined based on the first orthogonal sequence and the second time-frequency domain resource.

42. The method according to claim 41, wherein a sequence index *k*ᵢ of the third orthogonal sequence meets the following formula:${k}_{i} = \left({k}_{0}+i\times e\right) mod r ,$ or *k*ᵢ=(*k*₀+*s*ᵢ×e) mod r, wherein
*k*₀ is a sequence index of the first orthogonal sequence, i is a resource index of the second time-frequency domain resource, e is an adjustment step of the orthogonal sequence, r is a total quantity of orthogonal sequences comprised in the second orthogonal sequence set, and *s*ᵢ is an i^{th} value in a predefined sequence s.

43. The method according to claim 42, wherein *k*₀ is agreed on in a protocol or configured by the network device via signaling.

44. The method according to any one of claims 41 to 43, wherein the first time-frequency domain resource comprises a plurality of resource elements REs, and the plurality of REs are determined based on a sequence length L of the first orthogonal sequence, a quantity M of orthogonal frequency division multiplexing OFDM symbols or discrete Fourier transform-spread orthogonal frequency division multiplexing DFT-s-OFDM symbols corresponding to each code element in the first orthogonal sequence, and a quantity N of subcarriers corresponding to each code element in the first orthogonal sequence.

45. The method according to claim 44, wherein a quantity H of the plurality of REs meets the following formula: $H = L \times M \times N .$

46. The method according to claim 44 or 45, wherein one or more of L, M, or N are agreed on in a protocol or configured by the network device via signaling.

47. The method according to any one of claims 25 to 46, wherein sending the first data to the terminal device via the first channel comprises:
processing a modulation symbol of the first data by using the first orthogonal sequence, and sending the processed modulation symbol of the first data to the terminal device via the first channel.

48. The method according to any one of claims 25 to 46, wherein receiving the second data sent by the terminal device via the second channel comprises:
receiving a processed modulation symbol of the second data sent by the terminal device via the second channel, and processing the modulation symbol of the second data based on the first orthogonal sequence, to obtain the second data.

49. A communication apparatus, comprising a processor, wherein the processor is coupled to a memory, the memory is configured to store a computer program, and when the processor invokes the computer program, the apparatus is enabled to perform the method according to any one of claims 1 to 24 or any one of claims 25 to 48.
